# EUROPÄISCHE PATENTSCHRIFT

(11) **EP 2 640 762 B1**
(45) Veröffentlichungstag und Bekanntmachung des Hinweises auf die Patenterteilung: **02.11.2016**
(21) Anmeldenummer: 11785008.1
(22) Anmeldetag: 17.11.2011
(51) Int. Cl.: C08G 18/28, C08G 18/67, C09D 175/16

(54) **AUS URETHAN-BASIERTEN, POLYSILOXAN ENTHALTENDEN MAKROMONOMEREN ERHÄLTLICHE COPOLYMERE, VERFAHREN ZU DEREN HERSTELLUNG UND DEREN VERWENDUNG**
COPOLYMERS WHICH CAN BE OBTAINED FROM URETHANE-BASED, POLYSILOXANE-CONTAINING MACROMONOMERS, PROCESSES FOR THE PREPARATION THEREOF AND THEIR USE
COPOLYMÈRES POUVANT ÊTRE OBTENUS À PARTIR DE MACROMONOMÈRES À BASE D'URÉTHANES, CONTENANT DES POLYSILOXANES, PROCÉDÉ DE PRÉPARATION ET UTILISATION

(30) Priorität: 17.11.2010 EP 10191564
(43) Veröffentlichungstag der Anmeldung: 25.09.2013
(73) Patentinhaber: BYK-Chemie GmbH, 46483 Wesel (DE)
(72) Erfinder: JAUNKY, Wojciech, 46485 Wesel (DE); HANS, Marc, 46485 Wesel (DE); FRANK, Albert, 46509 Xanten (DE); GÖBELT, Bernd, 46487 Wesel (DE); NAGELSDIEK, René, 46499 Hamminkeln (DE); BUBAT, Alfred, 46487 Wesel (DE); OMEIS, Jürgen, 46286 Dorsten-Lembeck (DE)
(74) Vertreter: Leifert & Steffan
(86) Internationale Anmeldenummer: PCT/EP2011/070367
(87) Internationale Veröffentlichungsnummer: WO 2012/066084

(56) Entgegenhaltungen:
- EP-A1- 1 469 029
- EP-A2- 0 157 396
- EP-A2- 0 401 990
- WO-A1-2006/071388

## Beschreibung

Die Erfindung betrifft aus urethan-basierten, Polysiloxan enthaltenden Makromonomeren erhältliche Copolymere, ein Verfahren zu deren Herstellung und deren Verwendung

### Stand der Technik

Die wissenschaftliche Schrift "Solvent-Induced Self-Assembly in Cardanol-Based Urethan Methacrylate Comb Polymers Journal of Polymer Science: Part A: Polymer Chemistry, Vol. 47, 2996-3009 (2009)" behandelt Kammpolymere ausschließlich aus Makromonomeren. Dabei sind die Makromonomere aus einem Diisocyanat, einem Hydroxy-funktionalen (Meth)acrylat und einer Cardanol-basierten Gruppe aufgebaut. Diese Polymere dienten zur Studie der Lösemittel-induzierten Selbstorganisation von Kammpolymeren.

In "Synthesis and Characterization of Novel Sulfobetaines Derived from 2,4-Tolylene Diisocyanate Journal of Applied Polymer Science, Vol. 82, 3447-3459 (2001)" werden Kammpolymere aus Makromonomeren untersucht, wobei die Makromonomere auf einer Sulfobetain-Struktur basieren. Die Sulfobetain-Strukturen sollen die Morphologie und die physikalischen Eigenschaften der Kammpolymere abändern können.

In WO 2005/066224 A1 werden wasser- und öl-abweisende Fluoroacrylate beschrieben, die aus fluorierten Makromonomeren aufgebaut sind. In der Veröffentlichung "Synthesis of Polysiloxane-Grafted Fluoropolymers and Their Hydrophobic Properties, Journal of the Adhesion Society of Japan, Vol. 36 No. 6, Page 217-224 (2000)" werden Kammpolymere beschrieben, die durch Umsetzung eines Hydroxy-funktionalen Fluoropolymers mit einem Siloxan-modifizierten Isocyanat hergestellt werden. Die auf diese Weise erhaltenen Siloxan-modifizierten Hydroxy-funktionalen Fluoropolymere werden unter Verwendung eines Polyisocyanates quervernetzt, um eine Beschichtung zu erhalten. Diese Siloxan-modifizierten Hydroxy-funktionalen Fluoropolymere lassen sich nicht als Additive in standardmäßigen industriellen Beschichtungssystemen, wie 2K Polyurethan-, Polyester-Melamine-, Acryl-Melamin- oder Acryl-Epoxid-Systemen, verwenden, da sie mit diesen inkompatibel sind und zu Oberflächendefekten, wie Kraterbildung, führen. Des Weiteren verursacht die Verwendung von stark fluorierten Polymeren häufig höhere Produktionskosten und führt meist zu Problemen der Verträglichkeit mit anderen Komponenten in einem Beschichtungssystem. Zudem ist der Einsatz von Fluor und auch anderen Halogenen in organischen Substanzen ökologisch bedenklich, zum Beispiel werden perfluorierte Substanzen häufig nur äußert langsam bis gar nicht biologisch abgebaut.

WO 98/46693 A1 beschreibt eine flüssige härtbare Harzmischung aus verschiedenen Polysiloxan-Makromonomeren mit Urethan-Acrylaten. Dabei werden die verschiedenen Makromonomere und Urethan-Acrylate erst getrennt voneinander hergestellt, dann zu einer flüssigen härtbaren Zusammensetzung vermischt und nach dem Auftragen auf einem Substrat zum Beispiel durch UV-Strahlung zu einer Beschichtung gehärtet. Bei der Herstellung der Makromonomere und der Urethan-Acrylaten werden bifunktionale Monomere erzeugt, die bei der Aushärtung der aufgetragenen Harzmischung zu einer vernetzten Beschichtung führen. Eine starke Vernetzung erzeugt ein sehr hohes Molekulargewicht des Produktes. Die beschriebenen Polysiloxan-Makromonomere lassen sich nicht als Additive in standardmäßigen industriellen UV-Beschichtungssystemen verwenden, da sie mit diesen inkompatibel sind und zu Oberflächendefekten, wie Kraterbildung, führen.

Hinsichtlich kosmetischer Zusammensetzungen beschreibt die EP 0931537 B1 die Dispersion von organischen und anorganischen Pulvern in ölhaltigen Zusammensetzungen mit Hilfe von Polysiloxan enthaltenden Verbindungen. Die Polymere werden durch radikalische Copolymerisation vinylischer Polysiloxanmakromonomere mit anderen vinylischen Monomeren hergestellt, wobei die anderen vinylischen Monomere eine stickstoffhaltige Gruppe, eine Polyoxyalkylengruppe, eine anionische Gruppe oder eine Polylactongruppe enthalten.

US 6362274 B1 beschreibt gepfropfte Polymere, die wenigstens drei Sequenzen mit verschiedener chemischer Natur enthalten. Dabei besitzt mindestens eine Sequenz einen hydrophoben Charakter, mindestens eine Sequenz einen hydrophilen Charakter und mindestens eine Sequenz stellt eine Ankergruppe an feste Partikel dar. Diese Polymere werden als Dispergiermittel für feste Teilchen in wässrigen oder organischen Medien verwendet.

EP 0 401 990 A2 und WO 2006/071388 A1 offenbaren jeweils Präpolymere, die in biomedizinischen Geräten verwendet werden können. Aus EP 1 469 029 A1 sind Polyestersiloxanacrylate als Additive in Beschichtungsmitteln bekannt.

### Aufgabe

Aufgabe der vorliegenden Erfindung war es, Copolymere und ein Verfahren zu deren Herstellung bereitzustellen. Diese Copolymere sollen durch radikalische Copolymerisation von urethan-basierten, Siloxan-enthaltenden Makromonomeren und weiteren Comonomeren erhältlich sein und sie sollen zur Verwendung als Additive in Beschichtungsmitteln und/oder Kunststoffen geeignet sein. Dieses Herstellverfahren soll Makromonomere und deren Copolymere mit möglichst gut definierter Struktur, geringer Vernetzung und möglichst wenigen Nebenprodukten liefern, wobei die Copolymere eine gute Kompatibilität mit industriellen Beschichtungssystemen aufweisen sollen. Zusätzlich sollen die Copolymere durch ein sogenanntes "grafting to"-Verfahren herstellbar sein.

Da Halogen- und besonders Fluor-haltige organische Substanzen, besonders Fluor-Telomere, wie perfluorierte Alkyl-Komponenten mit einer Kettenlänge von ≥ 8 Kohlenstoffatomen, meist als umweltgefährdend eingestuft sind, ist es weiterhin wünschenswert, wenn die Copolymere möglichst frei von Fluor oder bestenfalls frei von jeglichen Halogenen wären. Neben dem umweltbedenklichen Aspekt von Halogen- und Fluor-haltigen organischen Substanzen weisen diese Substanzen zusätzlich eine meist schlechtere Verträglichkeit mit Beschichtungssystemen auf. Zudem verursacht die Verwendung von Fluor-haltigen organische Substanzen höhere Kosten. Daher ist es insgesamt wünschenswert, wenn Fluor oder auch andere Halogene nicht zur Verwendung kämen. Allerdings ist es nicht zwingend notwendig zur Lösung der Aufgabe, dass die bereitgestellten Copolymere frei von Fluor oder sogar gegebenenfalls frei von jeglichen Halogenen sind.

Durch die Verwendung der neuen Copolymere als Additive sollen die Eigenschaften der Beschichtungsmittel bzw. Beschichtungen und/oder Kunststoffe gezielt verändert werden können. Die Additive sollen als Verlaufmittel geeignet sein und den Verlauf, den Glanz und/oder die Opaleszenz der Beschichtungsmittel bzw. Beschichtungen oder Kunststoffe verbessern. Zudem sollen die Copolymere die Oberfläche von den Beschichtungsmitteln bzw. Beschichtungen und/oder den Kunststoffen modifizieren können, so dass sich beispielsweise schmutz-, wasser- und/oder ölabweisende Oberflächen erzielen lassen. Um beispielsweise die Benetzbarkeit derartiger Substratoberflächen zu vermeiden, muss die Oberflächenenergie der Substrate durch den Einsatz von diesen Additiven verringert werden.

Weiterhin sollen die zur Vermittlung dieser verbesserten Eigenschaften zugesetzten Additive die anderen Eigenschaften der Beschichtungsmittel bzw. Beschichtungen, polymeren Formmassen oder Thermoplasten, wie Korrosionsschutz oder Witterungsbeständigkeit, möglichst nicht beeinträchtigen. Die zugesetzten Additive sollen außerdem in relativ geringen Mengen ihre Wirksamkeit entfalten können. Die Beschichtungen, polymeren Formmassen und Thermoplasten sollen ihre verbesserten Oberflächeneigenschaften weiterhin über einen langen Zeitraum von mehreren Jahren beibehalten. Dies sollte auch die Permanenz der Effekte, beispielsweise des anti-adhäsiven und/oder schmutzabweisenden Effektes, über mehrere Reinigungszyklen hinweg mit einschließen.

Des Weiteren sollen sich die Copolymere der vorliegenden Erfindung als Netz- und Dispergiermittel eigenen, vor allem für die Herstellung von homogenen Dispersionen, wie Pigment- und Füllstoffpräparationen. Gegenüber dem Stand der Technik besteht immer noch ein Bedarf an verbesserten Systemen, um die Sedimentation von Pigmenten und Füllstoffen herabzusetzen und eine breitere Kompatibilität von Copolymeren hinsichtlich unterschiedlicher Zusammensetzungen zu gewährleisten, wie die Kompatibilität mit sehr unpolaren Zusammensetzungen, wie öl- und silikonbasierten Formulierungen.

Des Weiteren sollen Beschichtungsmittel bzw. Beschichtungen, Kunststoffe (d.h. polymere Formmassen und Thermoplaste) und homogene Dispersionen, wie Pigment- und Füllstoffpräparationen, bereitgestellt werden, die derart verbesserte Eigenschaften aufweisen.

### Lösung

Die Aufgabe wird überraschenderweise gelöst durch ein (Meth)acrylat-Copolymer, erhältlich durch radikalische Copolymerisation eines oder mehrerer urethanebasierter, Polysiloxan enthaltender Makromonomere und mindestens eines oder mehrerer weiterer radikalisch polymerisierbarer Monomere, wobei das oder die Makromonomere Oligomere oder Polymere mit einer funktionellen Endgruppe sind und durch Umsetzung mindestens

eines Hydroxy-funktionalen (Meth)acrylats
und mindestens eines Polysiloxan-, Polyether-Polysiloxan-, Polyester-Polysiloxan- oder Polyether/Polyester-Polysiloxan-modifizierten Isocyanates

gegebenenfalls in Anwesenheit eines Katalysators zur Herstellung der Urethanbindung und mindestens eines Inhibitors der radikalischen Polymerisation erhältlich sind und dass mindestens 85 % der eingesetzten Monomere zur Herstellung des Copolymers nur eine radikalisch polymerisierbare Doppelbindung haben.

Die Herstellung kann erfolgen nach der Makromonomer-Methode oder nach der "grafting to"-Methode.

Die Makromonomer-Methode ist ein Verfahren zur Herstellung eines (Meth)acrylat-Copolymers, indem ein oder mehrere Makromonomere, die durch Umsetzung mindestens

eines Hydroxy-funktionalen (Meth)acrylates
und mindestens eines Polysiloxan-, Polyether-Polysiloxan-, Polyester-Polysiloxan- oder Polyether/Polyester-Polysiloxan-modifizierten Isocyanates gegebenenfalls in Anwesenheit eines Katalysators zur Herstellung der Urethanbindung und mindestens eines Inhibitors der radikalischen Polymerisation erhältlich sind, und ein oder mehrere weitere radikalisch polymerisierbare Comonomere radikalisch copolymerisiert werden, wobei mindestens 85 % der eingesetzten Monomere zur Herstellung des Copolymers nur eine radikalisch polymerisierbare Doppelbindung haben und das eingesetzte Polysiloxan-, Polyether-Polysiloxan-, Polyester-Polysiloxan- oder Polyether/Polyester-Polysiloxan-modifizierte Isocyanat aufgereinigt wurde.

Die "grafting to"-Methode ist ein Verfahren zur Herstellung eines (Meth)acrylat-Copolymers, indem das (Meth)acrylat-Copolymer durch Umsetzung einer oder mehrerer urethan-basierter Komponenten eines Polysiloxan-, Polyether-Polysiloxan-, Polyester-Polysiloxan- oder Polyether/Polyester-Polysiloxan-modifizierten Isocyanates mit einem Hydroxy-funktionalen (Meth)acrylat-Copolymer aus mindestens einem Hydroxy-funktionalen (Meth)acrylat-Monomer und einem oder mehreren weiteren radikalisch polymerisierbaren Comonomeren gegebenenfalls in Anwesenheit eines Katalysators zur Herstellung der Urethanbindung erhältlich ist, wobei mindestens 85 % der eingesetzten Monomere zur Herstellung des Hydroxy-funktionalen (Meth)acrylat-Copolymers nur eine radikalisch polymerisierbare Doppelbindung haben.

Die (Meth)acrylat-Copolymere sind zur Verwendung als Additive in Beschichtungsmitteln und Kunststoffen geeignet. Außerdem eigenen sie sich als Netz- und Dispergiermittel, vor allem für die Herstellung von homogenen Dispersionen, wie Pigment- und Füllstoffpräparationen.

### Ausführliche Beschreibung der Erfindung

Makromonomere sind Oligomere oder Polymere mit einer funktionellen Endgruppe, über die Polymerisationsreaktionen ablaufen können. Makromonomere sind somit makromolekulare Monomere, die zu Homo- oder Copolymeren definierter Strukturen umgesetzt werden können. Beispielsweise können Makromonomere mit einer ethylenisch ungesättigten Endgruppe durch radikalische Polymerisation zu Kammpolymeren mit definierter Länge der Seitenketten umgesetzt werden. Kammpolymere sind auch aus linearen Ketten, die funktionelle Gruppen enthalten, an denen Seitenketten aufgepfropft oder durch polymeranaloge Reaktionen eingeführt werden, herstellbar.

Die Schreibweise (Meth)acrylat umfasst sowohl Acrylate als auch Methacrylate. Der Ausdruck (Meth)acrylatpolymer oder -copolymer soll bedeuten, dass das Polymer/Copolymer (Polymergerüst/rückgrat) überwiegend, d.h. mehr als 50 % der eingesetzten Monomereinheiten, aus Monomeren mit einer (Meth)acrylat-Gruppe aufgebaut ist. Bei der Herstellung eines (Meth)acrylat-Copolymers haben somit mehr als 50% der Monomere eine (Meth)acrylat-Gruppe. Es soll aber nicht ausgeschlossen werden, dass auch andere radikalisch polymerisierbare Monomereinheiten eingebaut werden können, wie z.B. Styrol oder Vinyl-funktionale Monomere.

Ein erfindungsgemäßes Copolymer ist ein Copolymer, dass erhältlich ist durch radikalische Copolymerisation eines oder mehrerer urethan-basierter, Polysiloxan enthaltender Makromonomere und mindestens eines oder mehrerer weiterer radikalisch polymerisierbarer Monomere, wobei das Copolymer ein (Meth)acrylat-Copolymer ist und das oder die-Makromonomere Oligomere oder Polymere mit einer funktionellen Endgruppe sind und durch Umsetzung mindestens
eines Hydroxy-funktionalen (Meth)acrylats
und mindestens eines Polysiloxan-, Polyether-Polysiloxan-, Polyester-Polysiloxan- oder Polyether/Polyester-Polysiloxan-modifizierten Isocyanates

gegebenenfalls in Anwesenheit eines Katalysators zur Herstellung der Urethanbindung und mindestens eines Inhibitors der radikalische Polymerisation erhältlich sind und zudem mindestens 85 % der eingesetzten Monomere zur Herstellung des Copolymers nur eine radikalisch polymerisierbare Doppelbindung haben.

Vorzugsweise erfolgt die Umsetzung des mindestens einen Hydroxy-funktionalen (Meth)acrylats mit dem mindestens einen Polysiloxan-, Polyether-Polysiloxan-, Polyester-Polysiloxan- oder Polyether/Polyester-Polysiloxan-modifizierten Isocyanat in gleichen molaren Mengen oder mit einem molaren Überschuss des Hydroxy-funktionalen (Meth)acrylats. Bevorzugt erfolgt die Umsetzung in einem molaren Verhältnis von 4 : 1 bis 1 : 1, wobei das molare Verhältnis das Verhältnis von den eingesetzten Hydroxy-funktionalen (Meth)acrylaten zu den eingesetzten Polysiloxan-, Polyether-Polysiloxan-, Polyester-Polysiloxan- oder Polyether/Polyester-Polysiloxan-modifizierten Isocyanaten ist.

Eine bevorzugte Ausführungsform ist ein Copolymer, bei dem das mindestens eine Hydroxy-funktionale (Meth)acrylat die allgemeine Formel (I) hat:

U-L-O-H (I)

U ist eine ethylenisch ungesättigte, radikalisch polymersierbare Kopfgruppe mit Acryloyl- [H₂C = CH - C(=O) - O -] oder Methacryloyl-Struktur [H₂C = C(CH₃) - C(=O) -O-].

L ist ein zweibindiger organischer Rest, der keine radikalisch polymerisierbaren Gruppen enthält. Unter radikalisch polymerisierbaren Gruppen werden funktionelle Gruppen verstanden, die unter hierfür üblichen Bedingungen radikalisch polymerisiert werden können, beispielsweise ethylenisch ungesättigte Gruppen. Bevorzugt wird L aus der Gruppe bestehend aus Alkylenresten, Polyesterresten und Polyalkylenoxidresten ausgewählt.

Besonders bevorzugt wird L aus der Gruppe, bestehend aus Alkylenresten mit 2 - 5 Kohlenstoffatomen, Polyesterresten mit 2 - 5 Caprolacton-Einheiten, Polyethylenoxid-Resten mit 2 - 5 Ethylenoxid-Einheiten, Polypropylenoxid-Resten mit 2 - 5 Propylenoxid-Einheiten und gemischten Polyethylenoxid/Polypropylenoxid-Resten mit 2 - 5 Alkylenoxid-Einheiten, ausgewählt.

Ganz besonders bevorzugt ist L ein Alkylenrest mit 2 - 5 Kohlenstoffatomen.

Das Startmolekül U - L - O - H wird vorzugsweise aus der Gruppe bestehend aus Hydroxyalkyl-Estern der Methacrylsäure [H₂C = C(CH₃) - C(=O) - O - (CH₂)ₐ - OH] und Polyethylenoxid-Estern der Methacrylsäure [H₂C = C(CH₃) - C(=O) - O - (CH₂ - CH₂ - O)ₐ - H] mit a = 1 - 20, bevorzugt a = 1 - 10 und besonders bevorzugt a = 2 - 5, ausgewählt.

Ganz besonders bevorzugt ist das Startmolekül U - L - O - H Hydroxyethylmethacrylat oder Hydroxybutylmethacrylat.

In einer weiteren bevorzugten Ausführungsform hat das mindestens eine Polysiloxan-, Polyether-Polysiloxan-, Polyester-Polysiloxan- oder Polyether/Polyester-Polysiloxan-modifizierte Isocyanat die allgemeine Formel (II): 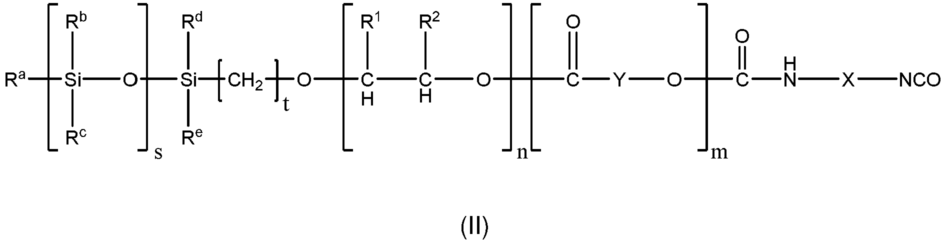
worin alle R¹ und R² unabhängig voneinander für H, Alkyl und/oder Aryl stehen, vorzugsweise für H,
X für Alkylen, Cycloalkylen und/oder Aralkylen steht, vorzugsweise für den Rest eines Diisocyanates ohne die NCO-Gruppen,
alle Y für Alkylen und/oder Cycloalkylen stehen,
n und m unabhängig voneinander sind, wobei die Summe n+m = 0 bis 100 ist,
R^{a} für einen gesättigten linearen Alkylrest mit 1 bis 30 Kohlenstoffatomen, einen gesättigten verzweigten oder zyklischen Alkylrest mit 3 bis 30 Kohlenstoffatomen oder einen Arylrest, einen Alkylarylrest oder einen Arylalkylrest mit 6 bis 30 Kohlenstoffatomen steht, vorzugsweise für einen Methylrest oder einen Butylrest, alle R^{b} und R^{c} unabhängig voneinander für gesättigte lineare Alkylreste mit 1 bis 6 Kohlenstoffatomen, gesättigte verzweigte oder zyklische Alkylreste mit 3 bis 6 Kohlenstoffatomen, ungesättigte Alkylreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl-, Phenyl- oder substituierte Phenylreste, besonders bevorzugt für Methylreste,
alle R^{d} und R^{e} unabhängig voneinander für R^{a}[SiR^{b}R^{c}O]ₛ ,wobei R^{a}, R^{b} und R^{c} wie oben definiert sind und unabhängig davon ausgewählt sind, gesättigte lineare Alkylreste mit 1 bis 6 Kohlenstoffatomen, gesättigte verzweigte oder zyklische Alkylreste mit 3 bis 6 Kohlenstoffatomen, Alkenreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl-, Phenyl- oder substituierte Phenylreste, besonders bevorzugt für Methylreste,
s = 1 bis 400 und t = 2 bis 30 ist, vorzugsweise ist s = 4 bis 200 und t = 3 bis 6.

Als Isocyanat werden bevorzugt aliphatische, cycloaliphatische oder araliphatische Isocyanate eingesetzt. Zum Beispiel werden Aryl-substituierte aliphatische Diisocyanate, wie beschrieben in Houben-Weyl, Methoden der Organischen Chemie, Volume 14/2, Seiten 61-70 und in einem Artikel von W. Siefken, Justus Liebig's Annalen der Chemie 562, Seiten 75-136, eingesetzt. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, sowie jede Mischung dieser Verbindungen. Weitere bevorzugte Isocyanate werden beschrieben in dem genannten Artikel von *Siefken* auf Seiten 122 ff.. 2,5(2,6)-Bis(isocyanatomethyl)bicyclo[2.2.1]heptan (NBDI) ist bevorzugt in reiner Form oder als Teil eines Gemisches. Besonders bevorzugt sind die technisch einfach zu erhaltenen aliphatischen und cycloaliphatischen Isocyanate und deren Isomer-Gemische.

Ganz besonders bevorzugt entspricht X der Baugruppe von 2,4-Toluoldiisocyanat, 2,6-Toluoldiisocyanat, bzw. Isomerengemische aus 2,4-Toluoldiisocyanat und 2,6-Toluoldiisocyanat, oder Isophorondiisocyanat (IPDI) ohne die NCO-Gruppen.

Vorzugsweise sind die modifizierten Isocyanate Polysiloxan-modizifierte Isocyanate der Formel (IIa), Polyether-Polysiloxan-modizifierte Isocyanate der Formel (IIb) oder Polyester-Polysiloxan-modizifierte Isocyanate der Formel (IIc) 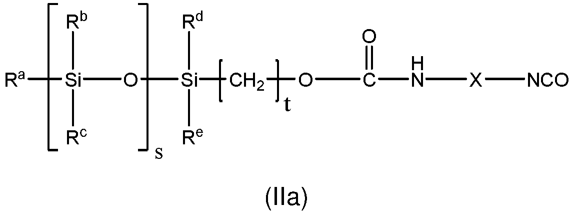 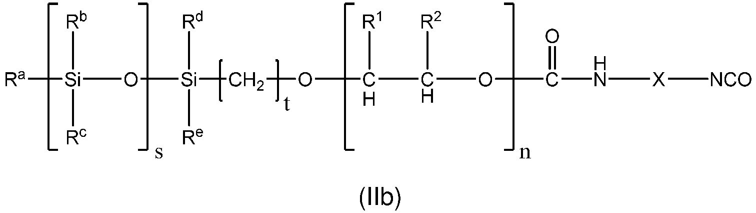 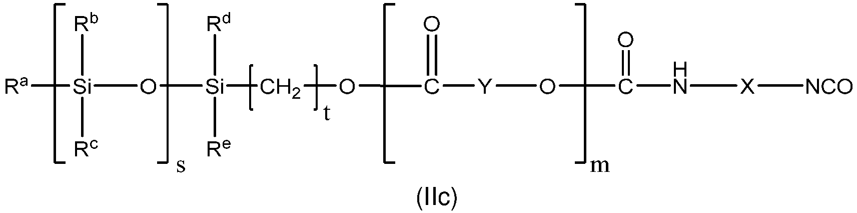 wobei R¹, R², X, Y, R^{a}, R^{b}, R^{c}, R^{d}, R^{e}, n, m, s und t definiert sind wie oben. Bevorzugt entspricht X der Baugruppe von 2,4-Toluoldiisocyanat, 2,6-Toluoldiisocyanat, bzw. Isomerengemische aus 2,4-Toluoldiisocyanat und 2,6-Toluoldiisocyanat, oder Isophorondiisocyanat (IPDI) ohne die NCO-Gruppen und m = 1 bis 100 und n = 1 bis 100. Besonders bevorzugt sind m = 2 bis 100, n = 2 bis 100, s = 4 bis 200 und t = 3 bis 6.

Das erfindungsgemäße Copolymer wird durch eine radikalische Copolymerisation mindestens eines der beschriebenen Urethan-basierten, Polysiloxan enthaltenden Makromonomere mit mindestens einem weiteren Monomer erhalten. Mindestens 85 % der eingesetzten Monomere haben nur eine radikalisch polymerisierbare Doppelbindung. Bevorzugt haben mindestens 90 % der eingesetzten Monomere nur eine radikalisch polymerisierbare Doppelbindung, vorzugsweise mindestens 95 %, besonderes bevorzugt mindestens 98 % und ganz besonderes bevorzugt mindestens 99 %. Die bevorzugten Mengen an Monomeren mit nur einer radikalisch polymerisierbaren Doppelbindung finden vor allem Anwendung für die Copolymere, die als Additive Beschichtungen und Kunststoffen zur Oberflächenmodifizierung zugesetzt werden.

Das (Meth)acrylat-Copolymer hat bevorzugt ein gewichtsmittleres Molekulargewicht von 2000 bis 100000 g/mol, vorzugsweise 5000 bis 75000 g/mol und besonderes bevorzugt 10000 bis 50000 g/mol. Durch ein entsprechendes Molekulargewicht werden die Handhabbarkeit und die Verträglichkeit der Copolymere verbessert, vor allem für die Verwendung als Additiv, welches dann als flüssiges Additiv eingesetzt werden kann. Wenn die Copolymere als Netz- und Dispergiermittel eingesetzt werden sollen, ist das gewichtsmittlere Molekulargewicht vorzugsweise 20000 bis 100000 g/mol. Das gewichtsmittlere Molekulargewicht der Copolymere wird mittels Gelpermeationschromatographie mit Tetrahydrofuran als Elutionsmittel und unter Verwendung von Polystyrol-Standards bestimmt.

Bevorzugt enthalten maximal 5 % der einpolymerisierten Monomere Fluor, vorzugsweise maximal 2%, besonders bevorzugt enthält keines der einpolymerisierten Monomere Fluor. Bevorzugt enthalten maximal 5 % der einpolymerisierten Monomere ein Halogen, vorzugsweise maximal 2%, besonders bevorzugt enthält keines der einpolymerisierten Monomere ein Halogen. Durch das Weglassen von Fluor oder auch anderen Halogenen können zum einen Kosten eingespart werden, aber wichtiger noch ist, dass dadurch die Verträglichkeit der Copolymere gesteigert wird und die ökologische Belastung herabgesetzt wird. Bevorzugt ist das Copolymer zu 0,2 - 95 Gew.-%, bezogen auf das Gesamtgewicht aller eingesetzten Makromonomere und Comonomere, aus einpolymerisierten Makromonomeren aufgebaut.

Des Weiteren ist bevorzugt, dass das Copolymer zu 0,2 - 30 Gew.-%, besonders bevorzugt zu 0,5 - 20 Gew.-%, ganz besonders bevorzugt zu 1 - 15 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Oberflächen modifizierende Additive in Beschichtungen und Kunststoffen. Dieser Gehalt an Makromonomeren ergibt die besten Eigenschaften der Copolymere in Hinblick auf die Verwendung als Additive für Beschichtungssysteme und Kunststoffe zur Verbesserung des Verlaufes und der Oberflächen modifizierenden Wirkung, wie beispielsweise der schmutz-, wasser- und/oder ölabweisenden Wirkung.

Zudem ist bevorzugt, dass das Copolymer zu 40 - 95 Gew.-%, besonders bevorzugt zu 70 - 95 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Netz- und Dispergiermittel in homogenen Dispersionen, wie Pigment- und Füllstoffpräparationen.

Bevorzugt werden die Makromonomere erhalten, indem die verwendeten Polysiloxan-, Polyether-Polysiloxan-, Polyester-Polysiloxan- oder Polyether/Polyester-Polysiloxan-modifizierten Isocyanate aufgereinigt wurden, vorzugsweise durch einen Dünnschichtverdampfer. Dadurch wird der Reinheitsgrad der Makromonomerbausteine erhöht, wodurch die Struktur der resultierenden Copolymere besser definiert ist.

Bevorzugte weitere radikalisch polymerisierbare Comonomere sind aus der Gruppe, bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, [alpha]-Methylstyrol, Acrylnitril, Triethylenglykolmonoacrylat, Triethylenglykolmonomethacrylat, Ethylvinylether, Butylvinylether, Hydroxyalkylvinylether, wie Hydroxybutylvinylether, Cyclohexylvinylether, Vinylacetat, Polyethylenglykolmonoacrylat, Polyethylenglykolmonomethacrylat ausgewählt.

Bevorzugt werden die Copolymere durch radikalische Copolymerisation eines oder mehrerer urethan-basierter, Polysiloxan enthaltender Makromonomere und mindestens eines oder mehrerer weiterer radikalisch polymerisierbarer Monomere erhalten.

### Makromonomer-Methode:

Die Makromonomer-Methode ist ein Verfahren zur Herstellung eines (Meth)acrylat-Copolymers, indem ein oder mehrere Makromonomere, die durch Umsetzung mindestens

eines Hydroxy-funktionalen (Meth)acrylates
und mindestens eines Polysiloxan-, Polyether-Polysiloxan-, Polyester-Polysiloxan- oder Polyether/Polyester-Polysiloxan-modifizierten Isocyanates

gegebenenfalls in Anwesenheit eines Katalysators zur Herstellung der Urethanbindung und mindestens eines Inhibitors der radikalischen Polymerisation erhältlich sind, und ein oder mehrere weitere radikalisch polymerisierbare Comonomere radikalisch copolymerisiert werden, wobei mindestens 85 % der eingesetzten Monomere zur Herstellung des Copolymers nur eine radikalisch polymerisierbare Doppelbindung haben und das eingesetzte Polysiloxan-, Polyether-Polysiloxan-, Polyester-Polysiloxan- oder Polyether/Polyester-Polysiloxan-modifizierte Isocyanat aufgereinigt wurde.

Vorzugsweise erfolgt die Umsetzung des mindestens einen Hydroxy-funktionalen (Meth)acrylats mit dem mindestens einen Polysiloxan-, Polyether-Polysiloxan-, Polyester-Polysiloxan- oder Polyether/Polyester-Polysiloxan-modifizierten Isocyanat in gleichen molaren Mengen oder mit einem molaren Überschuss des Hydroxy-funktionalen (Meth)acrylats. Bevorzugt erfolgt die Umsetzung in einem molaren Verhältnis von 4 : 1 bis 1 : 1, wobei das molare Verhältnis das Verhältnis von den eingesetzten Hydroxy-funktionalen (Meth)acrylaten zu den eingesetzten Polysiloxan-, Polyether-Polysiloxan-, Polyester-Polysiloxan- oder Polyether/Polyester-Polysiloxan-modifizierten Isocyanaten ist.

Vorzugsweise haben die Hydroxy-funktionalen (Meth)acrylate die oben angegebene allgemeine Formel (I).

Bevorzugt haben die Polysiloxan-, Polyether-Polysiloxan-, Polyester-Polysiloxan- oder Polyether/Polyester-Polysiloxan-modifizierten Isocyanate eine Struktur der oben angegebenen allgemeinen Formel (II).

Die Polysiloxan-, Polyether-Polysiloxan-, Polyester-Polysiloxan- oder Polyether/Polyester-Polysiloxan-modifizierten Isocyanate werden bevorzugt nach den Verfahren, wie sie in DE 199 19 482 A1 beschrieben sind, hergestellt. Dazu werden Monohydroxyverbindungen mit einem Überschuss an Diisocyanat, bevorzugt Toluylendiisocyanat, umgesetzt und der nicht umgesetzte Anteil des Diisocyanates wird wieder aus dem Reaktionsgemisch entfernt, vorzugsweise durch eine Aufreinigung mittels Dünnschichtverdampfer. Ein Überschuss an Diisocyanat ist nötig, um Kopplungsprodukte (Diaddukte) durch zwei Urethan-Bindungen zu vermeiden. Solche nicht NCO-funktionellen Diaddukte können nicht weiter umgesetzt werden und können nachher beim Polymerisationsprozess nicht mit einpolymerisiert werden. Besonders im Falle von Polysiloxankomponenten, können die Kopplungsprodukte in Lacksystemen zu Trübungen und Störungen führen. Es wird also ermöglicht, dass bei einer anschließenden radikalischen Copolymerisation der Makromonomere mit anderen Monomeren Copolymere mit Kammstruktur erhalten werden.

Bekannterweise fallen jedoch bei chemischen Synthesen regelmäßig Nebenprodukte an. Geringe Anteile von restlichem Diisocyanat aus der Vorstufe (Herstellverfahren der Komponenten der Formel (II)) können bei der Synthese der Makromonomere daher Monomere mit zwei radikalisch polymerisierbaren Gruppen (Produkt aus zwei Startmolekülen der Formel (I) U - L - O - H und einem Diisocyanat) bilden. Diese Nebenprodukte, sowie restliches Diisocyanat können zur Vernetzung während des Polymerisationsprozesses führen. Durch das Herstellverfahren der Komponenten der Formeln (II) (Überschuss von Diisocyanate in Vergleich zum Startmolekül und Reinigung des Reaktionsgemisches z.B. mit einem Dünnschichtverdampfer) können die Anteile solcher Nebenprodukte jedoch sehr gering gehalten werden. Bevorzugt weisen die Makromonomere daher nur sehr geringe, besonders bevorzugt keine Anteile von restlichen Diisocyanaten und von Molekülen mit zwei radikalisch polymerisierbaren Gruppen auf.

Die Herstellung der Makromonomere durch Urethanbildung zwischen den Komponenten erfolgt bevorzugt in Anwesenheit eines oder gegebenenfalls mehrerer Katalysatoren, bevorzugt zwischen 0°C und 100°C, vorzugsweise bei etwa 20°C bis 85°C.

Als Katalysatoren zur Herstellung der Urethanbindung sind beispielsweise tert. Amine, wie Triethylamin, Triethylendiamin, N-Methyl-pyridin und N-Methyl-morpholin, Metallsalze, wie Zinnoctoat, Bleioctoat und Zinkstearat, und organische Metallverbindungen, wie Dibutylzinndilaurat, geeignet.

Die Herstellung der Makromonomere erfolgt in Anwesenheit eines Inhibitors der radikalischen Polymerisation. Als Inhibitoren der radikalischen Polymerisation sind beispielsweise Hydrochinon, Hydrochinonmonomethylether, 4-Hydroxy-2,2,6,6-tetramethyl-1-piperidinyloxy (4-Hydroxy-TEMPO) oder Phenothiazine geeignet. Der Inhibitor der radikalischen Polymerisation wird eingesetzt, um freie Radikale abzufangen, die sich möglicherweise während der thermisch unterstützten Urethanbildung oder bei der Lagerung der Makromonomere bilden, so dass die Stabilität der ethylenisch ungesättigten, radikalisch polymerisierbaren Kopfgruppe U des Startmoleküls gewährleistet ist. Ein Vorteil bei der Verwendung eines Inhibitors der radikalischen Polymerisation liegt somit darin, dass die Reaktionsführung erleichtert wird und weniger Nebenprodukte wie Homooligomere oder Homopolymere anfallen.

Es können Lösemittel verwendet werden. Diese dürfen die Urethanbildung jedoch nicht beeinflussen. Geeignete Lösemittel sind beispielsweise solche, die keine aktiven Wasserstoffatome enthalten, die mit der Isocyanatgruppe reagieren könnten. Vorzugsweise werden aliphatische, cycloaliphatische, aromatische Lösemittel, Ketone und cyclische Ether, als Lösemittel eingesetzt. Die Wahl des Lösemittels richtet sich auch nach dem späteren Einsatzzweck des im Anschluss aus den Makromonomeren zu synthetisierenden erfindungsgemäßen Copolymers. Bevorzugt werden niedrigsiedende Lösemittel eingesetzt, um das Abdestillieren zu erleichtern.

Am Ende der Reaktion wird das Produkt abgekühlt. Lösemittel und Polymerisationsinhibitoren können bei Bedarf vor der nachfolgenden radikalischen Copolymerisation durch geeignete Destillations- oder Filtrationsmaßnahmen entfernt werden.

Aus den Makromonomeren und weiteren Comonomeren sind die erfindungsgemäßen Copolymere dadurch erhältlich, dass mindestens eines der Makromonomere und ein oder mehrere weitere, radikalisch polymerisierbare Comonomere, radikalisch polymerisiert werden. Zur Herstellung der erfindungsgemäßen Copolymere können ein oder mehrere verschiedene Makromonomere mit anderen Comonomeren radikalisch copolymerisiert werden.

Neben den Makromonomeren, die durch Umsetzung mindestens eines Hydroxy-funktionalen (Meth)acrylates erhalten werden, können auch Makromonomere eingesetzt werden, die durch Umsetzung eines anderen hydroxy-funktionalen Moleküls mit einer polymerisierbaren Gruppe mit mindestens einem Polysiloxan-, Polyether-Polysiloxan-, Polyester-Polysiloxan- oder Polyether/Polyester-Polysiloxan-modifizierten Isocyanat erhalten werden. Solche Makromonomere werden zum Beispiel erhalten, wenn ein Hydroxyalkylvinylether, wie Hydroxybutylvinylether, anstelle des Hydroxy-funktionalen (Meth)acrylates bei der Herstellung des Makromonomeres eingesetzt wird.

Zu dem oder den oben beschriebenen Makromonomeren werden ein oder mehrere davon verschiedene Comonomere eingesetzt, die radikalisch polymerisierbar sind. Unter radikalisch polymerisierbaren Comonomeren werden solche Verbindungen verstanden, die mindestens eine radikalisch polymerisierbare Gruppe tragen. Unter radikalisch polymerisierbaren Gruppen werden funktionelle Gruppen verstanden, die unter hierfür üblichen Bedingungen radikalisch polymerisiert werden können, beispielsweise ethylenisch ungesättigte Gruppen. Vorzugsweise wird diese ethylenisch ungesättigte Gruppe ausgewählt aus der Gruppe bestehend aus substituierten oder unsubstituierten Acryl-, Methacryl-, Styryl-, alpha-Methyl-Styryl-, Allyl-Vinylbenzyl-, Vinylether-, Vinylester- und Vinylketongruppen.

Besonders bevorzugte Monomereinheiten des Basismoleküls bei der radikalischen Polymerisation sind ausgewählt aus der Gruppe bestehend aus Alkenen mit 2 bis 30 Kohlenstoffatomen und Arylalkenen mit 8 bis 30 Kohlenstoffatomen, Alkylacrylaten und Alkylmethacrylaten von geradkettigen Alkoholen mit 1 bis 22 Kohlenstoffatomen oder verzweigten oder cycloaliphatischen Alkoholen mit 3 bis 22 Kohlenstoffatomen, Aralkylacrylaten und Aralkylmethacrylaten von Aralkylalkoholen mit 8 bis 18 Kohlenstoffatomen, Maleinsäureestern, Itaconsäureestern und Fumarsäureestern von geradkettigen Alkoholen mit 1 bis 22 oder verzweigten oder cycloaliphatischen Alkoholen mit 3 bis 22 Kohlenstoffatomen, Hydroxyalkyl(meth)acrylaten von geradkettigen Diolen mit 2 bis 36 Kohlenstoffatomen oder verzweigten oder cycloaliphatischen Diolen mit 3 bis 36 Kohlenstoffatomen, Vinylalkanoaten mit 2 bis 30 Kohlenstoffatomen, Styrolen und substituierte Styrolen, alpha-Methylstyrolen und substituierte alpha-Methylstyrolen, Alkylvinylethern, fluorierten und fluor-freien Alkylestern der Methacrylsäure, der Maleinsäure, der Fumarsäure, der Itaconsäure und der Mesaconsäure (Methylfumarsäure), Methacrylsäure, Acrylsäure, Vinylestern, Vinylethern, hydroxyfunktionellen Alkylvinylethern und Vinylketonen mit 3 bis 20 Kohlenstoffatomen, Vinyltrialkoxysilanen mit 5 bis 8 Kohlenstoffatomen und Methacryloxypropyltrialkoxysilanen mit 10 bis 16 Kohlenstoffatomen.

Als nicht funktionelle Monomere können beispielsweise Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexlacrylat, 2-Ethylhexlmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Styrol, alpha-Methylstyrol eingesetzt werden. Bevorzugt werden Ester der (Meth)Acrylsäure mit Alkanolen, beispielsweise mit Monohydroxyalkanen mit 1 bis 14 Kohlenstoffatomen, als Comonomere eingesetzt.

Als funktionelle Monomere können beispielsweise hydroxyfunktionelle oder carboxyfunktionelle Monomere in den Copolymeren eingesetzt werden, die mit reaktiven Gruppen des Bindemittels vernetzen können und somit einen dauerhaften Effekt gewährleisten. Um eine Vernetzung der resultierenden hydroxyfunktionellen Verlaufmittel mit z. B. Acryl-Melamin-Formaldehydharzen zu kontrollieren, ist es auch möglich, diese Hydroxylgruppen teilweise oder ganz mit Isocyanaten zu sekundären Carbamat-Gruppen umzusetzen, so dass bei der Vernetzung des Gesamtsystems dem Verlaufmittel genügend Zeit verbleibt, sich an der Grenzfläche zu orientieren, seine Wirkung dort zu entfalten und nach einer gewissen Zeitverzögerung mit dem Melaminformaldehydharz zu reagieren. Weiterhin zeigte es sich als besonders vorteilhaft, dass die Hydroxylgruppen der Momonomer-Einheiten in den erfindungsgemäßen Copolymeren mit reaktiven Gruppen des Bindemittels vernetzen können und somit einen dauerhaften Effekt gewährleisten.

Als Beispiele für Hydroxy-funktionale Monomere seien genannt: Hydroxyalkyl(meth)acrylate von geradkettigen Diolen mit 2 bis 36 Kohlenstoffatomen oder verzweigten oder cycloaliphatischen Diolen mit 3 bis 36 Kohlenstoffatomen, wie zum Beispiel 2-Hydroxyethyl(meth)acrylat, 3-Hydroxypropyl(meth)acrylat, 4-Hydroxybutyl(meth)acrylat, 3,4-Dihydroxybutyl(meth)acrylat, 2-Hydroxypropyl(meth)acrylat, 2,5-Dimethyl-1,6-hexandiolmono(meth)acrylat, Polyethylenglykolmono(meth)acrylat, Polypropylenglykolethylenglykolmono(meth)acrylat und Hydroxyalkylvinylether, wie zum Beispiel Hydroxybutylvinylether.

Weitere geeignete Monomere sind Caprolacton- und/oder Valerolacton-modifizierte Hydroxyalkylacrylate und Caprolacton- und/oder Valerolacton-modifizierte Hydroxyalkylmethacrylate mit einem gewichtsmittleren Molekulargewicht zwischen 220 bis 1200 g/mol, wobei die Hydroxy(meth)acrylate bevorzugt von geradkettigen Diolen mit 2 bis 8 Kohlenstoffatomen oder verzweigten oder cycloaliphatischen Diolen mit 3 bis 8 Kohlenstoffatomen abgeleitet sind.

Vorzugsweise haben die Copolymere freie OH-Gruppen. Besonders bevorzugt weisen die Copolymere eine OH-Zahl von 5 - 200 mg KOH/g, ganz bevorzug von 10 - 100 mg KOH/g auf. Die angegebenen bevorzugten OH-Zahlen weisen bevorzugt die Copolymere auf, die als Oberflächen modifizierende Additive in Beschichtungen und Kunststoffen eingesetzt werden. Des Weiteren können die Copolymere bevorzugt auch keine freien OH-Gruppen aufweisen, vor allem wenn die Copolymere für die bevorzugte Verwendung als Netz- und Dispergiermittel eingesetzt werden.

Nach der Copolymerisation können die Hydroxygruppen durch polymeranaloge Reaktionen noch nachträglich modifiziert werden. Beispielsweise können durch die nachträgliche Reaktion mit Maleinsäureanhydrid eine reaktive Doppelbindung und Säurefunktion mit eingebaut werden. Auch können freie OH-Gruppen durch z. B. nachträgliche Umsetzung mit Essigsäureanhydrid verestert werden, um bei Anwendung der Copolymere als Verlaufshilfsmittel in Lacken potentielle Zwischenschichthaftungsprobleme besser vermeiden zu können.

Weiterhin können durch die nachträgliche Umesterung (chemische oder enzymatische Umesterung) mit Hydroxy-funktionalen (Meth)acrylaten Produkte erhalten werden, die sich auch bei strahlenhärtenden Prozessen, wie UV- und Elektronenstrahlhärtung, fest in Lacksysteme einbauen lassen.

Als Beispiele für Carboxy-funktionelle Monomere seien genannt: Acrylsäure, Methacrylsäure, Maleinsäure, Fumarsäure und Itakonsäure.

Weitere Beispiele für funktionelle Monomere sind Epoxy-funktionelle und Silan-funktionelle Comonomere: durch die Verwendung von Epoxy-funktionellen Comonomeren, z. B. Glycidylacrylat und Glycidylmethacrylat, wie Glycidoxipropylacrylat oder Glycidoxipropylmethacrylat, oder durch Silan-funktionelle Comonomere, wie Vinyltriethoxysilan und Methacryloxypropyltrimethoxysilan, können kontrolliert selbstvernetzende Copolymere dargestellt werden.

Ionische Gruppen können als entsprechendes ionisches, ethylenisch ungesättigtes Monomer in das Copolymer eingeführt werden oder nachträglich durch polymeranaloge Reaktionen, wie zum Beispiel Salzbildung, erzeugt werden.

So ist es zum Beispiel möglich, Säurefunktionen im Copolymer, wie zum Beispiel Carbonsäuren und Phosphorsäureester, mit Basen umzusetzen. Weiterhin ist es möglich, ausgehend von Säureanhydriden, wie zum Beispiel Maleinsäureanhydrid, zuerst durch Hydrolyse mit Wasser oder Bildung eines Mono- oder Partialesters mit einwertigen Alkoholen oder Polyethern die Carbonsäurefunktion zu generieren und diese anschließend mit Basen umzusetzen.

Oxiranstrukturen im Copolymer lassen sich mit Nucleophilen wie o-Phosphorsäure umsetzen und anschließend mit Basen zu ionischen Gruppen versalzen.

Hydroxy-Funktionalitäten im Copolymer lassen sich mit Polyphosphorsäure zu Phosphorsäureester unter anschließender Versalzung mit Basen zu ionischen Gruppen umsetzen.

Geeignete Basen sind beispielsweise Amine, wie zum Beispiel Dimethylaminoethanol, Diethanolamin, Triethanolamin, 2-(Dimethylamino)propan-1-ol, Triethylamin, Butylamin und Dibutylamin, Hydroxide, Oxide, Carbonate und Hydrogencarbonate von Metallen der 1. bis 3. Hauptgruppe des Periodensystems der Elemente, wie zum Beispiel Natriumhydroxid, Kaliumhydroxid, Aluminiumhydroxid und Natriumhydrogencarbonat.

Beispiele für ionische, ethylenisch ungesättigte Monomere sind zum Beispiel Salze der Acrylsäure, Methacrylsäure, Maleinsäure oder Styrolsulfonsäure.

Zur radikalischen Polymerisation des oder der urethan-basierten Makromonomere werden ein oder mehrere Comonomere eingesetzt. Bevorzugt ist das Copolymer zu 0,2 - 95 Gew.-%, bezogen auf das Gesamtgewicht aller eingesetzten Makromonomere und Comonomere, aus einpolymerisierten Makromonomeren aufgebaut.

Des Weiteren ist bevorzugt, dass das Copolymer zu 0,2 - 30 Gew.-%, besonders bevorzugt zu 0,5 - 20 Gew.-%, ganz besonders bevorzugt zu 1 - 15 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Oberflächen modifizierende Additive in Beschichtungen und Kunststoffen. Dieser Gehalt an Makromonomeren ergibt die besten Eigenschaften der Copolymere in Hinblick auf die Verwendung als Additive für Beschichtungssysteme und Kunststoffe zur Verbesserung des Verlaufes und der Oberflächen modifizierenden Wirkung, wie beispielsweise der schmutz-, wasser- und/oder ölabweisenden Wirkung.

Zudem ist bevorzugt, dass das Copolymer zu 40 - 95 Gew.-%, besonders bevorzugt zu 70 - 95 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Netz- und Dispergiermittel in homogenen Dispersionen, wie Pigment- und Füllstoffpräparationen.

Die Herstellung der erfindungsgemäßen Copolymere durch radikalische Polymerisation kann in dem Fachmann bekannter Weise in organischen Lösemitteln oder in Masse in Anwesenheit von Radikalstartern, wie z.B. Peroxiden oder Azoverbindungen, erfolgen. Als Lösemittel kommen insbesondere Ester, wie z. B. Ethylacetat, n-Butylacetat oder 1-Methoxy-2-propylacetat, sowie aromatische Lösemittel, wie z. B. Toluol oder Xylol, und Ketone, wie z. B. Methylisobutylketon oder Methylethylketon, in Frage. Die Wahl des Lösemittels richtet sich auch nach dem späteren Einsatzzweck des Copolymers. Bevorzugt werden niedrigsiedende Lösemittel eingesetzt, um das Abdestillieren dieser Lösemittel bei Anwendungen zu erleichtern, in denen die Copolymere als 100 %-iges Produkt eingesetzt werden sollen, wie z. B. in UV-härtenden Lacksystemen oder in Polymeren.

Die radikalische Polymerisation wird vorzugsweise bei Temperaturen von ca. 40°C bis 180°C, bevorzugt bei 60 °C bis 150°C, besonders bevorzugt bei 80 °C bis 135°C durchgeführt.

Die radikalische Polymerisation kann als kontinuierliches oder diskontinuierliches Verfahren durchgeführt werden.

Die radikalische Polymerisation kann beispielsweise als Massepolymerisation, als Lösungspolymerisation, als Fällungspolymerisation, als Emulsionspolymerisation oder als Suspensionspolymerisation durchgeführt werden.

Die radikalische Polymerisation kann als freie radikalische Polymerisation oder auch als kontrollierte radikalische Polymerisation durchgeführt werden.

Durch Methoden der kontrollierten radikalischen Polymerisation lassen sich besser definierte Polymerarchitekturen mit einer engeren Molekulargewichtsverteilung erzielen. Es können die dem Fachmann bekannten Methoden der kontrollierten radikalischen Polymerisation verwendet werden, wie beispielsweise ATRP (Atom Transfer Radical Polymerization), GTP (Group Transfer Polymerization), NMP (Nitroxide Mediated Polymerization), RAFT (Reversible Addition Fragmentation Chain Transfer Process) oder MADIX (Macromolecular Design via the Interchange of Xanthates).

Zu den kontrollierten Polymerisationsverfahren gehört insbesondere der "Reversible Addition Fragmentation Chain Transfer Process" (RAFT), der bei Verwendung bestimmter Polymerisationsregler auch "MADIX" (Macromolecular Design via the Interchange of Xanthates) und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 sowie 1991, 29, 1053 sowie 1993, 31, 1551 sowie 1994, 32, 2745 sowie 1996, 34, 95 sowie 2003, 41, 645 sowie 2004, 42, 597 sowie 2004, 42, 6021 und auch in Macromol. Rapid Commun. 2003, 24, 197 und in US 6 291 620, WO 98/01478, WO 98/58974 und WO 99/31144 beschrieben.

Ein weiteres Verfahren zur kontrollierten Polymerisation benutzt Nitroxylverbindungen als Polymerisationsregler (NMP) und wird beispielsweise in Chem. Rev. 2001, 101, 3661 offenbart.

Ein weiteres kontrolliertes Polymerisationsverfahren ist auch die "Group Transfer Polymerization" (GTP), wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff., sowie in O.W. Webster, Adv. Polym. Sci. 2004, 167, 1-34 offenbart ist.

Die kontrollierte radikalische Polymerisation mit Tetraphenylethan, wie sie beispielsweise in Macromol. Symp. 1996, 111, 63 beschrieben ist, ist ein weiteres Beispiel für kontrollierte Polymerisationen.

Die kontrollierte radikalische Polymerisation mit 1,1-Diphenylethen als Polymerisationsregler ist beispielsweise in Macromolecular Rapid Communications, 2001, 22, 700 beschrieben.

Die kontrollierte radikalische Polymerisation mit Inifertern ist beispielsweise in Makromol. Chem. Rapid. Commun. 1982, 3, 127 offenbart.

Die kontrollierte radikalische Polymerisation mit Organokobaltkomplexen ist beispielsweise aus J. Am. Chem. Soc. 1994, 116, 7973, aus Journal of Polymer Science: Part A: Polymer Chemistry, Vol. 38, 1753-1766 (2000), aus Chem. Rev. 2001, 101, 3611̃3659 sowie aus Macromolecules 2006, 39, 8219-8222 bekannt.

Als weitere kontrollierte Polymerisationstechnik ist der Degenerative Chain Transfer mit Iod-Verbindungen, wie zum Beispiel in Macromolecules 2008, 41, 6261 oder in US 7 034 085 beschrieben, anzusehen.

Die kontrollierte radikalische Polymerisation in Gegenwart von Thioketonen wird beispielsweise in Chem. Commun., 2006, 835-837 und in Macromol. Rapid Commun. 2007, 28, 746-753 beschrieben.

Die Copolymere können statistische Copolymere, Block-Copolymere oder Gradientenpolymere sein und aus zwei oder mehreren, hydrophilen und/oder hydrophoben Monomeren aufgebaut sein.

Das gewichtsmittlere Molekulargewicht der Copolymere liegt bevorzugt im Bereich von 2 000 bis 100 000 g/mol, bevorzugt 5 000 bis 75 000 g/mol, besonders bevorzugt im Bereich von 10 000 bis 50 000 g/mol. Wenn die Copolymere als Netz- und Dispergiermittel eingesetzt werden sollen, ist das gewichtsmittlere Molekulargewicht vorzugsweise 20000 bis 100000 g/mol. Das gewichtsmittlere Molekulargewicht der Copolymere wird mittels Gelpermeationschromatographie mit Tetrahydrofuran als Elutionsmittel und unter Verwendung von Polystyrol-Standards bestimmt.

Um das gewichtsmittlere Molekulargewicht und die Molekulargewichtsverteilung der Copolymere zu beeinflussen, können geeignete Kontroll- bzw. Kettentransfer-Reagenzien eingesetzt werden. Beispielsweise sind hierzu auch Thiole, wie n-Octylmercaptan, n-Dodecylmercaptan oder t-Dodecylmercaptan, und Dimere des alpha-Methylstyrols geeignet. Beispielsweise können bei der Polymerisation geringe Mengen von difunktionellen Monomeren (z.B. Hexandioldiacrylat) mit eingesetzt werden, um das Molgewicht gezielt zu erhöhen.

### "Grafting to"-Methode:

Ein weiteres Verfahren zur Herstellung der oben beschriebenen Copolymere stellt die "grafting to"-Methode dar, indem das (Meth)acrylat-Copolymer durch Umsetzung einer oder mehrerer urethan-basierter Komponenten eines Polysiloxan-, Polyether-Polysiloxan-, Polyester-Polysiloxan- oder Polyether/Polyester-Polysiloxan-modifizierten Isocyanates mit einem Hydroxy-funktionalen (Meth)acrylat-Copolymer aus mindestens einem Hydroxy-funktionalen (Meth)acrylat-Monomer und einem oder mehreren weiteren radikalisch polymerisierbaren Comonomeren gegebenenfalls in Anwesenheit eines Katalysators zur Herstellung der Urethanbindung erhältlich ist, wobei mindestens 85 % der eingesetzten Monomere zur Herstellung des Hydroxy-funktionalen (Meth)acrylat-Copolymers nur eine radikalisch polymerisierbare Doppelbindung haben.

In einem ersten Schritt wird das Polymergerüst mit den Hydroxy-funktionalen Seiten Gruppen in einer radikalischen Copolymerisation hergestellt und in einem zweiten Schritt werden die oben beschriebenen Polysiloxan-, Polyether-Polysiloxan-, Polyester-Polysiloxan- oder Polyether/Polyester-Polysiloxan-modifizierten Isocyanate unter Bildung einer Urethanbindung mit dem Hydroxy-funktionalen Polymergerüst umgesetzt.

Das Polymergrundgerüst enthält mindestes eine Hydroxygruppe, mit der das modifizierte Isocyanat reagieren kann und die von einem einpolymerisierten Hydroxy-funktionalen (Meth)acrylat stammt. Dieses einpolymerisierte Hydroxy-funktionale (Meth)acrylat wird mit mindestens einem oder mehreren der oben genannten Comonomere copolymerisiert, wobei 85 % der eingesetzten Monomere nur eine radikalisch polymerisierbare Doppelbindung haben. Es können auch weitere Hydroxy-funktionale Comonomere mit einpolymerisiert sein. Bevorzugt können neben dem mindestens einem Hydroxy-funktionalen (Meth)acrylat auch Hydroxyalkylvinylether, wie beispielsweise Hydroxybutylvinylether, einpolymerisiert werden.

Die Polymerisation erfolgt nach einem der vorher beschriebenen Verfahren mit dem Unterschied, dass die erhaltenen Hydroxy-funktionalen Copolymere keines der oben beschriebenen Urethan-basierten, Polysiloxan enthaltenden Makromonomere enthalten. Neben den Hydroxy-funktionalen (Meth)acrylaten können auch noch weiter funktionale Comonomere einpolymerisiert sein, die zum Beispiel eine Carboxy-Funktionalität haben.

Die erhaltenen Copolymere mit Hydroxy-funktionalen Seitenketten werden dann in einem zweiten Schritt mit den Polysiloxan-, Polyether-Polysiloxan-, Polyester-Polysiloxan- oder Polyether/Polyester-Polysiloxan-modifizierten Isocyanaten umgesetzt, wodurch die modifizierten Isocyanate unter Bildung einer Urethanbindung an das Hydroxy-funktionale Copolymer angepfropft oder aufgepfropft werden. Die Reaktionsbedingungen, Katalysatoren und Lösemittel sind die gleichen wie vorher für die Herstellung der Makromonomere beschrieben wurde. Vorzugsweise wird mindestens ein Lösemittel verwendet. Bevorzugt wird das modifizierte Isocyanat in einer Menge eingesetzt, so dass 0,1 bis 100 % der enthaltenden Hydroxylgruppen der einpolymerisierten Hydroxy-funktionalen (Meth)acrylate umgesetzt werden. Vorzugsweise entspricht die eingesetzte Menge des modifizierten Isocyanates der Menge des modifizierten Isocyanates, die dazu nötig ist, dass das Copolymer zu 0,2 - 95 Gew.-%, bezogen auf das Gesamtgewicht aller eingesetzten Makromonomere und Comonomere, aus einpolymerisierten Makromonomeren aufgebaut ist, wobei die entsprechenden einpolymerisierten Makromonomere in diesem Fall durch Umsetzung des modifizierten Isocyanates mit den einpolymerisierten Hydroxy-funktionalen (Meth)acrylaten entstehen. Zur Erreichung des gewünschten Gehaltes an entsprechenden einpolymerisierten Makromonomeren am Copolymer ist dem Fachmann klar, welche Menge an Hydroxy-funktionalen (Meth)acrylaten in das Copolymer einpolymerisiert sein müssen.

Des Weiteren ist bevorzugt, dass die eingesetzte Menge der Menge an modifizierten Isocyanaten entspricht, so dass das Copolymer zu 0,2 - 30 Gew.-%, besonders bevorzugt 0,5 - 20 Gew.-%, ganz besonders bevorzugt 1 - 15 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Oberflächen modifizierende Additive in Beschichtungen und Kunststoffen.

Zudem ist bevorzugt, dass die eingesetzte Menge der Menge an modifizierten Isocyanaten entspricht, so dass das Copolymer zu 40 - 95 Gew.-%, besonders bevorzugt 70 - 95 Gew.-%, jeweils bezogen auf das Gesamtgewicht aller eingesetzten Makromonomere und Comonomere, aus einpolymerisierten Makromonomeren aufgebaut ist, vor allem für die bevorzugte Verwendung der Copolymere als Netz- und Dispergiermittel.

Die freien Hydroxyl- oder auch gegebenenfalls freien Carboxyl-Gruppen können wie oben beschrieben noch weiter funktionalisiert werden, um reaktive oder funktionelle Gruppen einzuführen.

Die bevorzugten Ausgangsverbindungen, wie Polysiloxan-, Polyether-Polysiloxan-, Polyester-Polysiloxan- oder Polyether/Polyester-Polysiloxan-modifizierten Isocyanate oder Hydroxy-funktionale (Meth)acrylate, und die bevorzugten Copolymereigenschaften, wie gewichtsmittleres Molekulargewicht, sind die bereits oben genannten.

### Beschreibung der Verwendung der Additive

Weiterer Gegenstand der Erfindung ist die Verwendung der Copolymere als Additive in Beschichtungsmitteln, Kunststoffen oder Kosmetika.

### Oberflächen modifizierende Additive

### Verwendung der Copolymere als Additive

Die erfindungsgemäßen Copolymere können als Additiv, wie Netz- und Dispergiermittel, Verlaufmittel, Entschäumer, Stabilisierungsmittel oder schmutz- und ölabweisendes Mittel, in Beschichtungsmitteln, Kunststoffen, Kosmetika oder homogenen Dispersionen, wie Pigment- und Füllstoffpräparationen, eingesetzt werden. Unter Kunststoffen werden polymere Formmassen und Thermoplasten verstanden.

Die Copolymere können zum Beispiel als Verlaufmittel in Beschichtungsmitteln eingesetzt werden, um beispielsweise die optischen Eigenschaften der resultierenden Beschichtung zu verbessern. Durch die Verwendung dieser Copolymere als Verlaufmittel kann beispielsweise auch der Glanz und/oder die Opaleszenz der Beschichtungsmittel bzw. Beschichtungen oder Kunststoffe verbessert werden.

Die Copolymere können zum Beispiel auch eingesetzt werden, um die Oberflächeneigenschaften von Beschichtungen, polymeren Formmassen und Thermoplasten zu verändern. Durch den Zusatz der Copolymere kann die Oberflächenenergie von Beschichtungen, polymeren Formmassen und Thermoplasten beeinflusst werden. Die Oberfläche kann hydrophiler oder auch hydrophober gestaltet werden, so dass die Haftung auf dieser Oberfläche verbessert wird oder aber auch vermindert wird, wodurch schmutzabweisende, leicht zu reinigende Oberflächen erhalten werden können. Im Allgemeinen werden durch eine Erhöhung der Oberflächenenergie hydrophilere Oberflächen erzielt, die leichter benetzt werden können und bessere Haftungsbedingungen bieten. Dagegen werden im allgemeinen durch eine Verminderung der Oberflächenenergie hydrophobere Oberflächen erzielt, die schwieriger benetzt werden können und schmutzabweisende, anti-adhäsive Eigenschaften aufweisen.

### Additive zur Erzielung schmutzabweisender, anti-adhäsiver Oberflächen

Durch den Zusatz der erfindungsgemäßen Copolymere zu den Beschichtungsmitteln, polymeren Formmassen und Thermoplasten können schmutzabweisende, leicht zu reinigende, anti-adhäsive Oberflächen erzielt werden. In den entsprechenden Copolymeren führen die hydrophoben Silikonanteile zu den zu erzielenden Eigenschaften, während das Backbone und mögliche hydrophilere Gruppen zur Verträglichkeit beitragen, wobei allerdings der Anteil der hydrophoben Gruppen überwiegt, um einen schmutzabweisenden Effekt, zu erzielen. Die Copolymere können auch beispielsweise zusätzlich zu den enthaltenen Polysiloxan-Gruppen vergleichsweise hydrophobe Gruppen enthalten. Solche Copolymere rufen üblicherweise auch eine drastische Verminderung der Oberflächenenergie hervor.

Beschichtungsmittel, polymere Formmassen und Thermoplasten, denen entsprechende Copolymere zugesetzt werden, weisen ausgezeichnete anti-adhäsive und schmutzabweisende Eigenschaften auf. Solche Beschichtungsmittelzusammensetzungen sind vorzugsweise Zusammensetzungen zur Herstellung von Antigraffiti-Beschichtungen, Trennbeschichtungen, selbstreinigenden Fassadenbeschichtungen, Eis abweisenden Beschichtungen, z.B. für Flugzeuge, Autoreifenbeschichtungen, Schmutz abweisenden Maschinen- bzw. Instrumentenbeschichtungen, marinen Beschichtungen (Anti-Fouling-Beschichtungen) und schmutzabweisenden Möbelbeschichtungen und Trennpapierbeschichtungen. Aufgrund des außergewöhnlich guten anti-adhäsiven Effekts der Beschichtungsmittelzusammensetzungen der vorliegenden Erfindung können selbst ölige Substanzen, wie beispielsweise Mineralöle, Gemüseöle oder ölige Präparationen, abgestoßen werden, so dass entsprechend beschichtete Behälter komplett von diesen Flüssigkeiten entleerbar sind. Dementsprechend sind die Beschichtungsmittelzusammensetzungen, welche entsprechend mit den erfindungsgemäßen Additiven versehen wurden, geeignet, Doseninnenflächen zu beschichten bzw. Behälterinnenflächen zu beschichten. Darüber hinaus sind aufgrund der außerordentlich breiten Kompatibilität der Copolymere dieselben auch geeignet zur Herstellung transparenter Beschichtungsmittel.

Die Copolymere beeinträchtigen die anderen Eigenschaften, wie zum Beispiel Wetterbeständigkeit oder mechanische Beständigkeit, der Beschichtungsmittel bzw. Beschichtungen, polymeren Formmassen oder Thermoplasten nicht negativ. Dabei können die erfindungsgemäßen Copolymere den Beschichtungsmitteln, polymeren Formmassen oder Thermoplasten in relativ geringen Mengen (Additivmengen) zugesetzt werden. Insbesondere in Beschichtungsmitteln und Kunststoffen, wie polymeren Formmassen und Thermoplasten, können die Copolymere vorzugsweise auch in relativ geringen Mengen von 0,01 bis 5 Gew.-%, bevorzugt von 0,02 bis 2 Gew.-% und besonders bevorzugt von 0,03 bis 1 Gew.-%, jeweils bezogen auf die gesamte Zusammensetzung des Beschichtungsmittels oder des gesamten Kunststoffes, eingesetzt werden.

Die physikalischen Eigenschaften der ursprünglichen Beschichtungsmittel bzw. Beschichtungen, polymeren Formmassen und Thermoplasten, beispielsweise in Bezug auf Korrosionsschutz, Glanzerhaltung und Witterungsbeständigkeit, werden durch die geringen Konzentrationen des Additivs nicht beeinträchtigt. Beschichtungsmittel bzw. Beschichtungen, polymere Formmassen und Thermoplasten, die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Sofern die Copolymere freie Hydroxylgruppen enthalten, zeigte es sich als besonders vorteilhaft, dass die Hydroxylgruppen der Copolymere mit reaktiven Gruppen des Bindemittels vernetzen und somit ein dauerhafter Effekt durch die erfindungsgemäßen Copolymere gewährleistet wird.

### Additive zur Erzielung leicht benetzbarer Oberflächen

Die Copolymere können Beschichtungsmitteln, polymeren Formmassen und Thermoplasten zugesetzt werden, so dass durch deren Zusatz die Oberflächenenergie der Beschichtungen, polymeren Formmassen und Thermoplasten erhöht wird, wodurch die Benetzbarkeit dieser Oberflächen verbessert wird. In den entsprechenden Copolymeren ist der Anteil an hydrophilen Gruppen im Vergleich zu den hydrophoben Gruppen dominant. Das Copolymer hat in diesem Fall insgesamt einen hydrophilen Charakter. In diesen Copolymeren führen geringe Mengen an hydrophoben Polysiloxan-Gruppen zu einer Orientierung der Copolymere an die Oberfläche von hydrophilen Medien und der dominante Anteil an hydrophilen Gruppen kann dann zur Erhöhung der Oberflächenenergie führen. Copolymere, die zur Erhöhung der Oberflächenenergie geeignet sind, enthalten dementsprechend zusätzlich zu den enthaltenen Polysiloxan-Gruppen noch vergleichsweise hydrophile Gruppen z.B. auf Basis von alkoxylierten Verbindungen oder durch einen ausgeprägten Polyether/Polyester-Anteil in den modifizierten Isocyanaten.

Beschichtungen, polymere Formmassen und Thermoplasten, denen entsprechende Copolymere zugesetzt werden, weisen ausgezeichnet benetzbare Oberflächen auf. Die Benetzbarkeit kann bestimmt werden, indem man nach den üblichen Methoden den Kontaktwinkel der Oberfläche gegen Wasser bestimmt. Für hydrophile Oberflächen soll der Kontaktwinkel < 60° betragen. Die Copolymere beeinträchtigen die anderen Eigenschaften, wie zum Beispiel Wetterbeständigkeit oder mechanische Beständigkeit, der Beschichtungsmittel bzw. Beschichtungen, polymeren Formmassen oder Thermoplasten nicht wesentlich. Dabei können diese Copolymere den Beschichtungsmitteln, polymeren Formmassen oder Thermoplasten in relativ geringen Mengen (Additivmengen) zugesetzt werden, beispielsweise in Mengen von 0,01 bis 5 Gew.-%, bevorzugt von 0,02 bis 2 Gew.-% und besonders bevorzugt von 0,03 bis 1 Gew.-%, jeweils bezogen auf die gesamte Zusammensetzung des Beschichtungsmittels oder des gesamten Kunststoffes.

Die physikalischen Eigenschaften der ursprünglichen Beschichtungsmittel bzw. Beschichtungen, polymeren Formmassen und Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel bzw. Beschichtungen, polymere Formmassen und Thermoplasten, die die Copolymere enthalten, zeigen die gewünschten Eigenschaften in der Regel auch über einen Zeitraum von mehreren Jahren hinweg und behalten diese Eigenschaften auch über mehrere Reinigungszyklen hinweg bei.

Sofern die Copolymere freie Hydroxylgruppen enthalten, zeigte es sich als besonders vorteilhaft, dass die Hydroxylgruppen der Copolymere mit reaktiven Gruppen des Bindemittels vernetzen können und somit einen dauerhaften Effekt gewährleisten.

Durch die Verwendung der Copolymere als Additive in Beschichtungsmitteln, polymeren Formmassen oder Thermoplasten können auch Oberflächen mit antistatischen Eigenschaften oder Antibeschlag-Eigenschaften erhalten werden. Entsprechend additivierte Oberfläche können sehr gut benetzt werden und können gegebenenfalls bei Überlackierung haftvermittlende Eigenschaften zeigen.

### Netz- und Dispergiermittel

Die Copolymere können auch als Dispergiermittel eingesetzt werden, und zwar in den aus dem Stand der Technik bekannten Einsatzgebieten von Dispergiermitteln, wobei anstelle der oder zusammen mit den aus dem Stand der Technik bekannten Dispergiermitteln die erfindungsgemäßen Copolymere als Dispergiermittel eingesetzt werden. So können diese z. B. bei der Herstellung oder Verarbeitung von Lacken, Leder- und Textilfarben, Pasten, Pigmentkonzentraten oder kosmetischen Zubereitungen eingesetzt werden, insbesondere wenn diese Feststoffe, wie Pigmente und/oder Füllstoffe, enthalten.

In einem Aspekt der vorliegenden Erfindung betrifft diese ein Verfahren zur Herstellung einer homogenen Dispersion, wobei das Verfahren das Vermischen von mindestens einem Pigment und/oder Füllstoff in einem Träger, gewählt aus der Gruppe bestehend aus mindestens einem Silikonöl, mit Hilfe mindestens eines erfindungsgemäßen Copolymers umfasst. Diese Dispersionen stellen vorzugsweise Pigment- und/oder Füllstoffpräparationen da, die vorzugsweise für Beschichtungssysteme verwendet werden. Homogen in diesem Zusammenhang bedeutet, dass mit bloßem Auge keine Phasenseparation oder Uneinheitlichkeiten erkannt werden können. Die verschiedenen Bestandteile sind gleichmäßig in der homogenen Dispersion verteilt.

Ein weiterer Aspekt der vorliegenden Erfindung betrifft ein silikonvernetztes Produkt oder Beschichtungsmittel, welches die vorgenannte homogene Dispersion enthält, und ein Verfahren zur Beschichtung, indem die vorgenannte homogene Dispersion und ein reaktiven Silikons vermischt werden und die Mischung gehärtet wird, um ein pigmentiertes/gefülltes silikonvernetztes Produkt oder Beschichtung zu erhalten.

Die reaktiven Silikone oder Bindemittel können in einer Vielzahl von Formen und Verbindungen vorliegen, wie beispielsweise Silikonölen, Silikon mit hohem Festkörper, wasserbasierten Silikonen, Silikonalkyden, silikonisierten Polyestern, silikonisierten Acrylharzen. Die Vernetzung kann durch Feuchtigkeitshärtung, Hydrosilysierungshärtung, Strahlenhärtung oder eine kombinierte Strahlen- und thermische Härtung (Dual-Cure) erfolgen.

### Pigmente

Pigmente sind pulver- oder plättchenförmige Farbmittel, die im Gegensatz zu Farbstoffen im umgebenden Medium unlöslich sind (vgl. dazu DIN 55943: 2001-10, Römpp Lexikon Lacke und Druckfarben, Georg Thieme Verlag 1998, Stichworte Farbmittel, Farbstoffe, Pigmente).

Unter Pigmenten im Sinne dieser Erfindung werden beispielsweise anorganische und organische Pigmente, Pigmentruße, Effektpigmente wie beispielsweise Perlglanz- und/oder Metalleffektpigmente, Glitterpigmente sowie Mischungen hiervon verstanden.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein. Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sog. Hybrid-Partikel handeln, die aus einem anorganischen Kern und einer organischen Hülle - oder umgekehrt - bestehen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls hervorragend dispergieren und stabilisieren.

In Bezug auf Perlglanzpigmente können beispielsweise die im Folgenden aufgelisteten Arten bzw. Typen von Perlglanzpigmenten Verwendung finden:
- natürliche Perlglanzpigmente, wie z.B. "Fischsilber" (Guanin/Hypoxanthin-Mischkristalle aus Fischschuppen) und "Perlmutt" (vermahlene Muschelschalen),
- monokristalline Perlglanzpigmente, wie z. B. Bismuthoxychlorid (BiOCl) oder plättchenförmiges Titandioxid, und
- Schicht-Substrat-Perlglanzpigmente.

Geeignete zu beschichtende plättchenförmige transparente Substrate für die Schicht-Substrat-Perlglanzpigmente sind nichtmetallische, natürliche oder synthetische plättchenförmige Substrate. Die Substrate sind vorzugsweise im Wesentlichen transparent, bevorzugt transparent, d.h. für sichtbares Licht zumindest teilweise durchlässig.

Die plättchenförmigen transparenten Substrate können dabei aus der Gruppe von natürlichem Glimmer, synthetischem Glimmer, Glasflakes, SiO₂-Plättchen, Al₂O₃-Plättchen, Sericit, Kaolin, Graphit, Talkum, Polymerplättchen, plättchenförmigem Bismuthoxychlorid, plättchenförmigen Substraten, welche eine anorganischorganische Mischschicht umfassen, und deren Mischungen, ausgewählt sein.

Synthetische Substrate, wie beispielsweise Glasflakes oder synthetischer Glimmer, weisen glatte Oberflächen sowie eine einheitliche Dicke innerhalb eines einzelnen Substratteilchens auf. Somit bietet die Oberfläche nur wenig Streuzentren für einfallendes bzw. reflektiertes Licht und ermöglicht so nach Beschichtung höherglänzende Perlglanzpigmente als mit natürlichem Glimmer als Substrat. Als Glasflakes werden bevorzugt jene verwendet, die nach den in EP 0 289 240 A1, WO 2004/056716 A1 und der WO 2005/063637 A1 beschriebenen Verfahren hergestellt werden können bzw. welche die aus der EP 1 980 594 B1 bekannte Glaskomposition aufweisen.

Die Perlglanzpigmente können auch plättchenförmige transparente Substrate, beispielsweise Glasplättchen, als Substrat aufweisen, welche insbesondere beidseitig mit semitransparenten Metallschichten beschichtet sind. Die Metalle der semitransparenten Metallschichten sind bevorzugt aus der Gruppe von Silber, Aluminium, Chrom, Nickel, Gold, Platin, Palladium, Kupfer, Zink, Titan sowie deren Mischungen und Legierungen ausgewählt.

Das plättchenförmige transparente Substrat kann mit mindestens einer optisch wirksamen Schicht oder Beschichtung versehen werden, wobei die Schichten vorzugsweise Metalloxide, Metalloxidhydrate, Metallhydroxide, Metallsuboxide, Metalle, Metallfluoride, Metalloxyhalide, Metallchalcogenide, Metallnitride, Metalloxynitride, Metallsulfide, Metallcarbide und deren Mischungen umfassen. Gemäß einer bevorzugten Ausführungsform der vorliegenden Erfindung bestehen die optisch wirksamen Schichten oder Beschichtungen aus den vorstehend genannten Materialien.

Wird eine hochbrechende Schicht oder Beschichtung auf das plättchenförmige transparente Substrat aufgebracht, so liegt der Brechungsindex insbesondere bei n ≥ 1,8, bevorzugt bei n ≥ 1,9 und besonders bevorzugt bei n ≥ 2,0. Im Falle einer niedrigbrechenden Schicht oder Beschichtung liegt der Brechungsindex bei insbesondere bei n < 1,8, bevorzugt bei n < 1,7 und besonders bevorzugt bei n < 1,6.

Als hochbrechende Schicht oder Beschichtung eignen sich beispielsweise TiO₂, Fe₂O₃, Fe₃O₄, TiFe₂O₅, FeTiO₃, ZnO, SnO₂, CoO, Co₃O₄, ZrO₂, Cr₂O₃ VO₂, V₂O₃, Sb₂O₃, SnO₂, SbO₂ und deren Mischungen. Bevorzugt werden TiO₂ und/oder Fe₂O₃ eingesetzt. Als niedrigbrechende Schicht oder Beschichtung sind beispielsweise SiO₂, Al₂O₃, MgF₂ und deren Mischungen geeignet.

Die plättchenförmigen transparenten Substrate der Perlglanzpigmente können mit einem ein- oder mehrlagigen Schichtaufbau aus Metalloxiden, Metallhydroxiden, Metallsuboxiden bzw. Metalloxidhydraten beschichtet werden, wobei die Reihenfolge der Schichten variabel sein kann. Die Metalloxide, Metallhydroxide, Metallsuboxide und/oder Metalloxidhydrate können auch nebeneinander in derselben Schicht vorliegen.

Ist das plättchenförmige transparente Substrat mit nur einer einzigen Metalloxidschicht beschichtet, so weist diese vorzugsweise einen hohen Brechungsindex auf. In Abhängigkeit von der geometrischen Metalloxidschichtdicke können derartige Perlglanzpigmente unterschiedliche Farbeffekte bewirken. Beispielsweise haben silberweiße Perlglanzpigmente mit einer TiO₂-Belegung und einer geometrischen TiO₂-Schichtdicke von 40 bis 60 nm die Farbe silber; Interferenzpigmente haben mit einer TiO₂-Belegung und einer geometrischen TiO₂-Schichtdicke von 60 bis 80 nm die Farbe gelb, von 80 bis 100 nm die Farbe rot, von 100 bis 140 nm die Farbe blau, von 120 bis 160 nm die Farbe grün und von 280 bis 320 nm die Farbe grün (III. Ordnung); Farbglanzpigmente haben mit einer Fe₂O₃-Belegung und einer geometrischen Fe₂O₃-Schichtdicke von 35 bis 45 nm die Farbe bronze, von 45 bis 55 nm die Farbe kupfer, von 55 bis 65 nm die Farbe rot, von 65 bis 75 nm die Farbe rotviolett, von 75 bis 85 nm die Farbe rotgrün und mit einer Fe₃O₄-Belegung die Farbe schwarz; Kombinationspigmente haben mit einer TiO₂/Fe₂O₃-Belegung Goldtöne, mit einer TiO₂/Cr₂O₃-Belegung die Farbe grün und mit einer TiO₂/Berliner Blau-Belegung die Farbe tiefblau.

Die plättchenförmigen transparenten Substrate können auch mit einem mehrlagigen Schichtaufbau mit oder bestehend aus Metalloxid, Metallhydroxid, Metallsuboxid und/ oder Metalloxidhydrat beschichtet werden, wobei die Reihenfolge der Schichten variabel sein kann. Bevorzugt ist hierbei eine Schichtenfolge, bei dem wenigstens eine hochbrechende Schicht und wenigstens eine niedrigbrechende Schicht in alternierender Weise auf einem Substrat angeordnet sind. Bei der alternierenden Anordnung ist es auch möglich, ein oder mehrere hochbrechende Schichten unmittelbar übereinander und nachfolgend ein oder mehrere niedrigbrechende Schichten unmittelbar übereinander anzuordnen. Wesentlich ist jedoch, dass in dem Schichtaufbau hoch- und niedrigbrechende Schichten vorkommen. Vorzugsweise sind aufgehend vom Substrat wenigstens eine hoch-, niedrig- und wiederum hochbrechende Schicht angeordnet, was in Perlglanzpigmenten mit besonders intensiven Interferenzfarben resultiert.

Mit TiO₂ und/oder Eisenoxid beschichtete Perlglanzpigmente auf Basis von plättchenförmigem natürlichem Glimmer sind beispielsweise unter dem Namen Prestige von der Firma Eckart GmbH im Handel erhältlich. Besteht das plättchenförmige transparente Substrat aus synthetischem Glimmer, sind derartige Perlglanzpigmente z. B. unter dem Handelsnamen SynCrystal der Firma Eckart GmbH kommerziell erhältlich. Mit TiO₂ und/oder Fe₂O₃ beschichtete Al₂O₃-Flakes und entsprechend beschichtete SiO₂-Flakes werden beispielsweise unter dem Handelsnamen Xirona von der Firma Merck KGaA angeboten. Mit TiO₂ und/oder Eisenoxid beschichtete Glasflakes werden z.B. von der Firma Eckart GmbH unter dem Namen Mirage, von der Firma BASF Catalysts unter der Bezeichnung Reflecks oder von der Firma Merck KGaA unter der Bezeichnung Ronstar angeboten. Auch mehrschichtige Interferenzpigmente, wie sie z.B. in der DE 196 18 569 A1 beschrieben werde und aus einem Trägermaterial bestehen, das mit alternierenden Schichten von Metalloxiden mit niedriger und hoher Brechzahl beschichtet ist, können im Rahmen der vorliegenden Erfindung eingesetzt werden.

Außerdem sind auch Pigmente mit Interferenzeffekt, welche kein Substrat aufweisen, beispielsweise Flüssigkristalle, wie Helicone, erhältlich durch die LCP Technology GmbH, oder Partikel mit opaleszierendem Effekt, bestehend aus monodispersen Kugeln in einer dreidimensionalen, domänenweise dicht gepackten und regelmäßig angeordneten Struktur, wie sie beispielsweise in der WO 2001/88044 beschrieben sind, einsetzbar. Darüber hinaus können auch holografische Glitterpigmente, wie z. B. Geometrie Pigments von Spectratek, Fluoreszenzpigmente, Phosphoreszenzpigmente, photochrome Pigmente, thermochrome Pigmente und sogenannte "Quantum Dots", erhältlich z.B. von der Firma Quantum Dots Corporation, Verwendung finden.

Ferner können auch sogenannte "Glitter"-Effektpigmente, welche beispielsweise unter der Handelsbezeichnung Metasomes Standard/Glitter in verschiedenen Farben (gelb, rot, grün, blau) von der Firma Floratech erhältlich sind, eingesetzt werden. Die Glitterpartikel können hierbei in Gemischen mit verschiedenen Hilfs- und Farbstoffen (wie beispielsweise den Farbstoffen mit den Colour Index (CI) Nummern 19 140, 77 007, 77 289, 77 491) vorliegen.

Neben Perlglanzpigmenten können im Rahmen der vorliegenden Erfindung auch insbesondere Metalleffektpigmente zum Einsatz kommen.

Das plättchenförmige Metallsubstrat kann dabei insbesondere aus einem reinen Metall und/oder aus einer Metalllegierung bestehen. Das Metallsubstrat kann vorzugsweise aus der Gruppe von Silber, Aluminium, Eisen, Chrom, Nickel, Molybdän, Gold, Kupfer, Zink, Zinn, Edelstahl, Magnesium, Stahl, Bronze, Messing, Titan und deren Legierungen bzw. Mischungen ausgewählt sein. Bevorzugt besteht das Metallsubstrat jedoch aus Aluminium (Aluminiumgehalt vorzugsweise > 99 Gew.- %, bezogen auf das Metallsubstrat), Kupfer (Kupfergehalt vorzugsweise größer 99 Gew.-%, bezogen auf das Metallsubstrat) und Goldbronze (Kupfergehalt beispielsweise 70 bis 95 Gew.-%, Zinkgehalt beispielsweise 5 bis 30 Gew.-%, jeweils bezogen auf das Metallsubstrat). Die in den metallischen Substraten vorhandenen Verunreinigungen sollten in möglichst geringen Mengen vorliegen, vorzugsweise < 1 Gew.-%, bezogen auf das Substrat.

Das plättchenförmige Metallsubstrat kann mit wenigstens einer Nachbeschichtung versehen sein. Diese Nachbeschichtung kann z. B. aus Metalloxiden, -hydroxiden oder -oxidhydraten wie beispielsweise Titandioxid, Aluminiumoxid, Eisenoxid, Ceroxid, Chromoxid und Siliziumoxid oder deren Mischungen bestehen. Vorzugsweise besteht die Nachbeschichtung aus mindestens einer Schicht von Siliziumdioxid.

Derartig stabilisierte Metalleffektpigmente, wie sie in der EP 1 532 213 B1 sowie der EP 1 758 550 A2 beschrieben sind, werden z. B. unter der Marke Visionaire von der Firma Eckart GmbH angeboten.

Eine erweiterte Farbpalette für Metalleffekte bietet darüber hinaus zusätzlich gefärbte Metalleffektpigmente, welche
a) einen Kern aus Aluminium sowie eine durch nasschemische Oxidation erhaltene farbgebende Schicht aus Aluminiumoxid bzw. -hydroxid bzw. -oxidhydrat aufweisen oder
b) einen Kern sowie mindestens eine Metalloxidschicht, welche mindestens ein Farbpigment enthält, aufweisen.

Zusätzlich gefärbte Metalleffektpigmente ermöglichen neben den traditionellen Gold-und Silberfarbtönen auch Rotfarbtöne, wie z. B. Visionaire Bright Red 7 und Visionaire Bright Red 34, Blaufarbtöne, wie z. B. Visionaire Bright Blue, sowie warme Champagnerfarbtöne, wie z. B. Visionaire Bright Champagne. Solche Pigmente sind beispielsweise bekannt aus der DE 195 01 307 A1, DE 195 20 312 A1, DE 103 61 436 A1 sowie DE 10 2006 006 716 A1 und sind kommerziell von der Firma Eckart GmbH erhältlich.

Außerdem können auch Infrarotstrahlung reflektierende Metalleffektpigmente, beispielsweise beschrieben in WO 2007/076967, welche einen Infrarot- Strahlung reflektierenden Kern besitzen, eingesetzt werden. Der IR-Strahlung reflektierende Kern ist mit einer für Infrarotstrahlen durchlässigen und umhüllenden Beschichtung versehen. Das Infrarotstrahlung reflektierende Pigment ist im Wesentlichen weiß.

Daneben können magnetische Metalleffektpigmente, wie beispielsweise plättchenförmige Eisenpigmente, die mit einer passivierenden Inhibitor- bzw. Korrosionsschutzschicht stabilisiert sein können, eingesetzt werden. Derartige Pigmente werden beispielsweise in der EP 1 251 152 B1 beschrieben.

Die Pigmente können beispielsweise aus der entsprechenden Positivliste der Kosmetikverordnung (Verordnung (EG) Nr. 1223/2009, Anhang IV) ausgewählt werden.

In einer weiteren Ausführungsform können die beschriebenen Pigmente mit wenigstens einer organischen Nachbeschichtung, die in einer dem Fachmann bekannten Weise aufgebracht wird, belegt sein.

Bevorzugte Verfahren zur Nachbeschichtung umfassen beispielsweise:
- PEG-Siliconbeschichtung, wie beispielsweise die "AQ"-Modifizierung, erhältlich von LCW,
- Chitosanbeschichtung, wie beispielsweise die "CTS"-Modifizierung, erhältlich von LCW,
- Triethoxycaprylylsilanbeschichtung, wie beispielsweise die "AS"-Modifizierung, erhältlich von LCW,
- Methiconbeschichtung, wie beispielsweise die "SI"-Modifizierung, erhältlich von LCW,
- Dimethiconbeschichtung, wie beispielsweise die "Covasil 3.05"-Modifizierung, erhältlich von LCW,
- Dimethicone/Trimethylsiloxysilicatbeschichtung, wie beispielsweise die "Covasil 4.05"-Modifizierung, erhältlich von LCW,
- Lauryllysinbeschichtung, wie beispielsweise die "LL"-Modifizierung, erhältlich von LCW,
- Lauryllysinmethiconbeschichtung, wie beispielsweise die "LL/SI"-Modifizierung, erhältlich von LCW,
- Magnesiummyristatbehandlung, wie beispielsweise die "MM"-Modifizierung, erhältlich von LCW,
- Aluminumdimyristatbeschichtung, wie beispielsweise die "MI"-Modifizierung, erhältlich von Miyoshi,
- Perfluorpolymethylisopropyletherbeschichtung, wie beispielsweise die "FHC"-Modifizierung, erhältlich von LCW,
- Dinatriumstearylglutamatbeschichtung, wie beispielsweise die "NAI"-Modifizierung, erhältlich von Miyoshi,
- Perfluoralkylphosphatbehandlung, wie beispielsweise die "PF"-Modifizierung, erhältlich von Daito,
- Acrylat/Dimethicon- und Perfluoroalkylphosphatbeschichtung, wie beispielsweise die "FSA"-Modifizierung, erhältlich von Daito,
- Polymethylhydrogensiloxan/Perfluoroalkylphosphatbeschichtung, wie beispielsweise die "FS01 "-Modifizierung, erhältlich von Daito,
- Lauryllysin/Aluminumtristearatbeschichtung, wie beispielsweise die "LL-StAl"-Modifizierung, erhältlich von Daito,
- Octyltriethylsilanbeschichtung, wie beispielsweise die "OTS"-Modifizierung, erhältlich von Daito,
- Octyltriethylsilan/Perfluoralkylphosphatbeschichtung, wie beispielsweise die "FOTS"-Modifizierung, erhältlich von Daito,
- Acrylatdimethiconcopolymerbeschichtung, wie beispielsweise die "ASC"-Modifizierung, erhältlich von Daito,
- Isopropyltitantriisostearatbeschichtung, wie beispielsweise die "ITT"-Modifizierung, erhältlich von Daito,
- Mikrokristalline Cellulose- und Carboxymethylcellulosebeschichtung, wie beispielsweise die "AC"-Modifizierung, erhältlich von Daito,
- Acrylatcopolymerbeschichtung, wie beispielsweise die "APD"-Modifizierung, erhältlich von Daito, sowie
- Perfluoralkylphosphat/Isopropyltitantriisostearatbeschichtung, wie beispielsweise die "PF+ITT"-Modifizierung, erhältlich von Daito.

Die Pigmente können sowohl einzeln als auch im Gemisch vorliegen und darüber hinaus gegenseitig miteinander beschichtet sein.

Zur Erzielung spezieller Farbeffekte können im Rahmen der vorliegenden Erfindung neben den beschriebenen Pigmenten weitere Pigmente und/oder Effektpigmente bzw. deren Mischungen in variablen Mengenverhältnissen eingesetzt werden.

### Silikonöle

Beispiele von Silikonölen umfassen die der folgenden Strukturen:

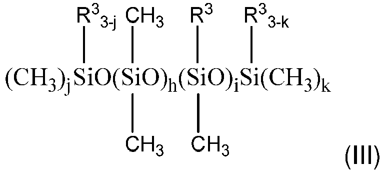

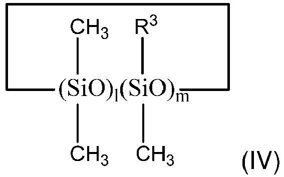

R⁴_{4-z}Si(OSi(CH₃)₃)_{z} (V)

wobei R³ gewählt ist aus der Gruppe bestehend aus Wasserstoff, einer Hydroxylgruppe, Alkyl- oder fluorinierten Alkylgruppen mit 2 bis 20 Kohlenstoffatomen, Arylgruppen, Aminoalkylgruppen, C₆₋₂₂-Alkoxygruppen und einer Gruppe der Formel (CH₃)₃SiO[(CH₃)₂SiO]_{y}Si(CH₃)₂CH₂CH₂-, worin y eine ganze Zahl von 0 bis 500 ist. R⁴ ist eine C₁₋₂₀-Alkylgruppe. In Formel (III) ist h eine ganze Zahl von 0 bis 1000, i eine ganze Zahl von 0 bis 1000, unter der Voraussetzung, dass h + i = 1 bis 2000 beträgt und jedes j und k unabhängig voneinander 0, 1, 2 oder 3 beträgt. In Formel (IV) stehen I und m für ganze Zahlen von 0 bis 8, wobei I + m von 3 bis 8 reicht, und in Formel (V) steht z für eine ganze Zahl von 1 bis 4. Beispiele für den Rest R³ umfassen Methyl, Ethyl, Propyl, Butyl, Hexyl, Octyl, Decyl, Dodecyl, Tetradecyl, Hexadecyl, Octadecyl, Trifluoropropyl, Nonafluorohexyl, Heptadecylfluorodecyl, Phenyl, Aminopropyl, Dimethylaminopropyl, Aminoethylaminopropyl, Stearoxy, Butoxy, Ethoxy, Propoxy, Cetyloxy, Myristyloxy, Styryl und alpha-Methylstylyl, worunter Hexyl, Octyl, Decyl, Dodecyl, Tetradecyl, Hexadecyl, Octadecyl, Trifluoropropyl, Phenyl, Aminopropyl und Aminoethylaminopropyl bevorzugt sind. Beispiele des Silikonöls umfassen Organopolysiloxane mit niedriger oder hoher Viskosität, wie beispielsweise Dimethylpolysiloxan, Methylphenylpolysiloxan, Methylhydrogenpolysiloxan und Dimethylsiloxanmethylphenylsiloxan-Copolymer; Cyclosiloxane, wie Octamethylcyclotetrasiloxan (D4), Decamethylcyclopentasiloxan (D5), Dodecamethylcyclohexasiloxan (D6), Tetramethyltetrahydrogencyclotetrasiloxan (H4) und Tetramethyltetraphenylcyclotetrasiloxan; Tristrimethylsiloxysilan (M3T), Tetrakistrimethylsiloxysilan (M4Q); verzweigte Siloxane, wie beispielsweise Tristrimethylsiloxypropylsilan, Tristrimethylsiloxybutylsilan, Tristrimethylsiloxyhexylsilan und Tristrimethylsiloxyphenylsilan; höhere alkoholmodifizierte Silikone, wie Steroxysilikon; alkylmodifizierte Silikone, aminomodifizierte Silikone und fluoromodifizierte Silikone.

### Anwendungen

Die Pigment- und/oder Füllstoffdispersionen in Silikonöl entsprechend der vorliegenden Erfindung können in einem weiten Bereich von Formulierungen einschließlich Harzen, Ölen, Fetten, Gleitmitteln, Gummimaterialien, Dichtmitteln, Klebstoffen, Wachsen oder Beschichtungsmittelzusammensetzungen eingesetzt werden. Die Dispersionen können auch in Formulierungen, die in der Körperpflegeindustrie hergestellt werden, eingesetzt werden oder in elektrischen Anwendungen in der Elektronikindustrie, in der Schiffsindustrie, für medizinische Anwendungen, in der Bauindustrie oder in der Automobilindustrie. Beispiele schließen kosmetische Präparate, elektronisches Papier, wie zum Beispiel das Display wie bei Ebooks, die Verkapselung mikroelektronischer Chips, Unterwasserbootshautbeschichtungen, wie beispielsweise Anti-Fouling-Beschichtungen, Silikonröhren oder Gleitadditive für Bremskomponenten ein.

Die Copolymere können in relativ breiten Mengen von 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion eingesetzt werden. Bei den homogenen Dispersionen handelt es sich vorzugweise um Pigment-und Füllstoffpräparationen.

Weiterer Gegenstand der vorliegenden Erfindung sind Lacke, Pasten und Formmassen enthaltend die erfindungsgemäßen Copolymere und ein oder mehrere Pigmente, organische Lösemittel und/oder Wasser, sowie gegebenenfalls Bindemittel und lackübliche Hilfsstoffe.

Weiterer Gegenstand der Erfindung sind Beschichtungsmittel, Kunststoffe oder homogene Dispersionen enthaltend mindestens ein erfindungsgemäßes Copolymer. Dabei beträgt der Copolymeranteil vorzugsweise 0,01 bis 5 Gew.-%, bevorzugt 0,02 bis 2 Gew.-% und besonders bevorzugt 0,03 bis 1 Gew.-%, jeweils bezogen auf die gesamte Zusammensetzung des Beschichtungsmittels oder des Kunststoffes, in Beschichtungsmitteln oder Kunststoffen oder in homogenen Dispersionen, wie Pigment- und Füllstoffpräparationen, vorzugsweise 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion, beträgt.

### BEISPIELE

### Abkürzungen:

"MAA" = Methacrylsäure
"HEMA" = 2-Hydroxyethylmethacrylät
"EHA" = 2-Ethylhexylacrylat
"IBMA" = Isobutylmethacrylat
"STY" = Styrol
"PMA" = 1-Methoxy-2-propylacetat
"TDI" = Toluyldiisocyanat
"TDI100" = Toluol-2,4-diisocyanat
"DBTL" = Dibutylzinndilaurat
"PMI" = Polymolekularitätsindex
"PDMS" = Polydimethylsiloxan
"TDI-PDMS" = Monoaddukt aus monohydroxyfunktionellem Polydimethylsiloxan und Toluyldiisocyanat
"HEMA-TDI-PDMS" = Addukt aus (2-Hydroxyethyl)-methacrylat und einem Monoaddukt eines monohydroxyfunktionellen Polydimethylsiloxans und Toluyldiisocyanat
"PEG" = Polyethylenglykol
"TDI- PEG -PDMS" = Monoaddukt aus monohydroxyfunktionellem Polyethylenglykol Polydimethylsiloxan und Toluyldiisocyanat
"HEMA-TDI-PEG-PDMS" = Addukt aus (2-Hydroxyethyl)-methacrylat und einem Monoaddukt eines monohydroxyfunktionellen Polyethylenglykol Polydimethylsiloxans und Toluyldiisocyanat
"Siliconöl D5" ist ein Cyclopolydimethylsiloxan (decamethylcyclopentasiloxane).

### Handelsnamen:

"Silaplane FM-0421" ist ein lineares monohydroxyfunktionelles Polydimethylsiloxan (Mw∼5000) erhältlich von Chisso Corp.
"Silaplane FM-0721" ist ein monomethacrylfunktionelles Polydimethylsiloxan (Mw∼5000) erhältlich von Chisso Corp.
"Trigonox C" ist ein *tert*-Butylperbenzoat. Es ist ein Starter der radikalischen Polymerisation (erhältlich von Akzo Nobel Chemicals).
"Dow Corning 5562" (DC5562) ist ein Polyethermodifiziertes Polysiloxan für die Kombination mit Pigmenten in dekorativer Kosmetik geeignet, verbessert die Dispergierbarkeit (erhältlich von Dow Corning).

### Meßverfahren:

### Gelpermeationschromatographie (GPC)

Die Gelpermeationschromatographie wurde bei 40°C mit einer Hochdruckflüssigkeitschromatographie-Pumpe (Bischoff HPLC 2200) und einem Brechungsindexdetektor (Waters 419) durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht Mn, das gewichtsmittlere Molekulargewicht Mw und der Polymolekularitätsindex PMI = Mw/Mn wurden mit dem Programm NTeqGPC berechnet.

### NCO-Gehaltsbestimmung

Der NCO-Gehalt wird durch Umsetzung der NCO-Gruppen (Isocyanate) mit einem Dibutylaminüberschuß zu Harnstoffderivaten und anschließender Rücktitration des überschüssigen Amins mit HCl quantitativ bestimmt. Der NCO-Gehalt gibt den Gehalt an Isocyanat in Gew.-% an.

### Hydroxyzahlbestimmung

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktiriert. Die OH-Zahl gibt die Menge KOH in mg an, die der bei der Acetylierung von 1 g Substanz gebundenen Menge Essigsäure äquivalent ist.

### Festkörperbestimmung

Ca. 2 g Probe werden in eine vorher getrocknete Aluminiumschale eingewogen und 10 Minuten bei 150°C im Trockenschrank getrocknet, im Exsikkator abgekühlt, und dann zurückgewogen. Der Rückstand entspricht dem Festkörperanteil.

### BEISPIELE

### Beispiele mit polydimethylsiloxanhaltigen Copolymeren

### Herstellung eines TDI-PDMS Monoadduktes (1a):

In einem mit Rührer, Thermometer, Tropftrichter, Rückflusskühler und Stickstoffeinleitungsrohr versehenen Vierhalskolben werden 33,4 g Desmodur T100 (TDI100, NCO-Gehalt = 48,8 Gew.-%) und 0,57 g Benzoylchlorid vorgelegt und gut durchmischt. 250 g Silaplane FM-0421 werden langsam zudosiert, so dass die Temperatur 55 °C nicht übersteigt. Das Gemisch wird nach der Zudosierung weitere 3 Stunden bei 55 °C gerührt. Das überschüssige TDI wird mittels Dünnschichtverdampfer bei 150 °C aus dem Reaktionsgemisch entfernt. Der NCO-Gehalt beträgt 0,92 Gew.-% und der Restgehalt an TDI beträgt 0,21 Gew.-%.

### Herstellung eines HEMA-TDI-PDMS Makromonomers (1b):

In einem mit Rührer, Thermometer, Tropftrichter, Rückflusskühler und Stickstoffeinleitungsrohr versehenen Vierhalskolben werden 70 g TDI-PDMS Monoaddukt (1a), 4 g HEMA, 0,015 g DBTL und 0,004 g Phenothiazin vorgelegt und gründlich vermischt. Das Gemisch wird auf 80 °C erhitzt und 5 Stunden gerührt bis der NCO-Gehalt < 0,05 Gew.-% beträgt.

### Herstellung eines TDI-PEG-PDMS Monoadduktes (2a):

Synthese von monohydroxyfunktionellem Polyethylenglykol Polydimethylsiloxan (intermedio 2a): In einem mit Rührer, Thermometer, Tropftrichter, Rückflusskühler und Stickstoffeinleitungsrohr versehenen Vierhalskolben werden Allylpolyethylenglykol (477,8 g, Mn ≈ 387 g/mol) und Karstedt Katalysator (2,44 g, 0,2%ige Anlösung in Xylol) vorgelegt und auf 55 °C erhitzt. Die Zudosierung eines mono-SiH-funktionellen Polydimethylsiloxans (500 g, Mn ≈ 505 g/mol) erfolgt in der Art, daß die Temperatur 75 °C nicht überschreitet. Die Umsetzung des mono-SiH-funktionellen Polysiloxans wird mittels gasvolumetrischer Bestimmung verfolgt. Die gemessene Hydroxyzahl des Produktes beträgt 71,9 mg KOH/g.

In einem mit Rührer, Thermometer, Tropftrichter, Rückflusskühler und Stickstoffeinleitungsrohr versehenen Vierhalskolben werden 357,8 g Desmodur T100 (TDI100, NCO-Gehalt = 48,8 Gew.-%) und 0,15 g Benzoylchlorid vorgelegt und gut durchmischt. 400 g eines monohydroxyfunktionellen Polysiloxans (intermedio 2a) werden langsam zudosiert, so dass die Temperatur 35 °C nicht übersteigt. Das Gemisch wird nach der Zudosierung weitere 6 Stunden bei 35 °C gerührt. Das überschüssige TDI wird mittels Dünnschichtverdampfer bei 150 °C aus dem Reaktionsgemisch entfernt. Der NCO-Gehalt beträgt 4,65 Gew.-% und der Restgehalt an TDI beträgt 0,13 Gew.-%.

### Herstellung eines HEMA-TDI-PEG-PDMS Makromonomers (2b):

In einem mit Rührer, Thermometer, Tropftrichter, Rückflusskühler und Stickstoffeinleitungsrohr versehenen Vierhalskolben werden 250 g TDI-PEG-PDMS Monoaddukt (2a), 39,51 g HEMA, 0,43 g DBTL und 0,02 g Phenothiazin vorgelegt und gründlich vermischt. Das Gemisch wird auf 80 °C erhitzt und 5 Stunden gerührt bis der NCO-Gehalt < 0,05 Gew.-% beträgt.

### Herstellung eines IPDI-PDMS Monoadduktes (3a):

Synthese von monohydroxyfunktionellem Polydimethylsiloxan (intermedio 3a): In einem mit Rührer, Thermometer, Tropftrichter, Rückflusskühler und Stickstoffeinleitungsrohr versehenen Vierhalskolben werden mono-SiH-funktionelles Polysiloxan (300 g, Mn ≈ 2000 g/mol) und Karstedt Katalysator (0,75 g, 0,2%ige Anlösung in Xylol) vorgelegt und auf 55 °C erhitzt. Die Zudosierung von Allylglycol (19,9 g) erfolgt in der Art, daß die Temperatur 75 °C nicht überschreitet. Die Umsetzung des mono-SiH-funktionellen Polysiloxans wird mittels gasvolumetrischer Bestimmung verfogt. Nach vollständiger Umsetzung wird das überschüssige Allylglycol abdestilliert. Die gemessene Hydroxyzahl des Produktes beträgt 25,2 mg KOH/g.

In einem mit Rührer, Thermometer, Tropftrichter, Rückflusskühler und Stickstoffeinleitungsrohr versehenen Vierhalskolben werden 33,4 g IPDI (NCO-Gehalt = 37,4 Gew.-%), 46 g Xylol und 0,08 g DBTL vorgelegt und gut durchmischt.

300 g eines monohydroxyfunktionellen Polysiloxans (intermedio 3a) werden langsam zudosiert, so dass die Temperatur 30 °C nicht übersteigt. Das Gemisch wird nach der Zudosierung weitere 2 Stunden gerührt. Das überschüssige IPDI wird mittels Dünnschichtverdampfer bei 150 °C aus dem Reaktionsgemisch entfernt. Der NCO-Gehalt beträgt 1,68 Gew.-% und der Restgehalt an IPDI beträgt 0,01 Gew.-%.

### Herstellung eines HEMA-IPDI-PDMS Makromonomers (3b):

In einem mit Rührer, Thermometer, Tropftrichter, Rückflusskühler und Stickstoffeinleitungsrohr versehenen Vierhalskolben werden 189,16 g IPDI-PDMS Monoaddukt (3a), 10,84 g HEMA, 0,3 g DBTL, 0,05 g 2,6-Di-tert-butyl-p-cresol und 0,1 g hydroquinone monomethyl ether vorgelegt und gründlich vermischt. Das Gemisch wird auf 70 °C erhitzt und 9 Stunden gerührt bis der NCO-Gehalt < 0,05 Gew.-% beträgt.

### Herstellung eines PDMS Makromonomers ohne Urethanverbindungen (4):

In einem mit Rührer, Thermometer, Tropftrichter, Rückflusskühler und Stickstoffeinleitungsrohr versehenen Vierhalskolben werden 125 g Allylmethacrylat, 100 g Toluol und 0,6 g Karstedt-Lösung (0.8% in Xylol) vorgelegt und gründlich vermischt. Bei 25 °C werden innerhalb von 6 Stunden 250 g mono-SiH-funktionelles Polysiloxan (Mn ≈ 2000 g/mol) zugetropft. Die Umsetzung des mono-SiH-funktionellen Polysiloxans wird mittels gasvolumetrischer Bestimmung verfolgt. Nach vollständigem Umsatz der SiH-Funktion werden 0,125 g Hydrochinon zugegeben und das Gemisch 3 Stunden bei 100 °C destilliert.

### Erfindungsgemäßes Beispiel 1: [Makromonomer Methode]

In einem mit Rührer, Thermometer, Tropftrichter, Rückflusskühler und Stickstoffeinleitungsrohr versehenen Vierhalskolben werden 6,10 g des HEMA-TDI-PDMS Makromonomers (1b) und 100 g PMA vorgelegt und gründlich vermischt. Während der gesamten Reaktion wird Stickstoff übergeleitet. Die Temperatur wird auf 135 °C erhöht und es wird innerhalb von 3 Stunden eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135 °C gehalten. Es werden 104 g PMA hinzugegeben. Die OH-Zahl der Polymerlösung beträgt 30,8 mg KOH/g und es wurde ein Festkörpergehalt von 28,3% bestimmt. Das GPC Chromatogramm zeigt eine monomodale Verteilung des polydimethylsiloxanhaltigen Copolymers mit M_{w} = 18100 g/mol und PMI = 4.97.

### Erfindungsgemäßes Beispiel 2: ["grafting to"-Methode]

In einem mit Rührer, Thermometer, Tropftrichter, Rückflusskühler und Stickstoffeinleitungsrohr versehenen Vierhalskolben werden 100 g PMA vorgelegt und auf 135 °C erhitzt. Innerhalb von 3 Stunden wird eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135 °C gehalten. Es werden 104 g PMA hinzugegeben. Die Temperatur wird auf 80 °C erniedrigt, 0,035 g DBTL und 6,06 g TDI-PDMS Monoaddukt (1a) werden zugegeben und das Gemisch 5 Stunden bei 80°C gerührt. Die OH-Zahl der Polymerlösung beträgt 24 mg KOH/g und es wurde ein Festkörpergehalt von 26,8% bestimmt. Das GPC Chromatogramm zeigt eine monomodale Verteilung des polydimethylsiloxanhaltigen Copolymers mit M_{w} = 15800 g/mol und PMI = 4,66.

### Vergleich Beispiel 3:

In einem mit Rührer, Thermometer, Tropftrichter, Rückflusskühler und Stickstoffeinleitungsrohr versehenen Vierhalskolben werden 6,10 g Silaplane FM-0721 und 100 g PMA vorgelegt und gründlich vermischt. Während der gesamten Reaktion wird Stickstoff übergeleitet. Die Temperatur wird auf 135 °C erhöht und es wird innerhalb von 3 Stunden eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135°C gehalten. Es werden 104 g PMA hinzugegeben. Die OH-Zahl der Polymerlösung beträgt 26,8 mg KOH/g und es wurde ein Festkörpergehalt von 26,3% bestimmt. Das GPC Chromatogramm zeigt eine monomodale Verteilung des polydimethylsiloxanhaltigen Copolymers mit M_{w}= 14500 g/mol und PMI = 3,87.

### Vergleich Beispiel 4:

In einem mit Rührer, Thermometer, Tropftrichter, Rückflusskühler und Stickstoffeinleitungsrohr versehenen Vierhalskolben werden 100 g PMA vorgelegt. Während der gesamten Reaktion wird Stickstoff übergeleitet. Die Temperatur wird auf 135°C erhöht und es wird innerhalb von 3 Stunden eine Mischung aus 1,21 g MAA, 25,3 g IBMA, 15,4 g HEMA, 17,4 g STY und 0,89 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135°C gehalten. Es werden 104 g PMA hinzugegeben. Die OH-Zahl der Polymerlösung beträgt 29,5 mg KOH/g und es wurde ein Festkörpergehalt von 22,8% bestimmt. Das GPC Chromatogramm zeigt eine monomodale Verteilung des Copolymers mit Mm = 13600 g/mol und PMI = 3,48.

### Erfindungsgemäßes Beispiel 5: [Makromonomer Methode]

In einem mit Rührer, Thermometer, Tropftrichter, Rückflusskühler und Stickstoffeinleitungsrohr versehenen Vierhalskolben werden 54 g des HEMA-IPDI-PDMS Makromonomers (3b) und 38,2 g PMA vorgelegt und gründlich vermischt. Während der gesamten Reaktion wird Stickstoff übergeleitet. Die Temperatur wird auf 110°C erhöht und es wird innerhalb von 3 Stunden eine Mischung aus 6 g EHA und 1,8 g Trigonox C zudosiert. Nach beendeter Dosierung werden sofort 0,3 g Trigonox C zugegeben. Nach weiteren 30 Minuten und 60 Minuten werden noch mal je 0,3 g Trigonox C zugesetzt. Danach wird der Ansatz noch zwei Stunden bei 115°C gehalten. Sämtliches Lösungsmittel wird abdestilliert. Das GPC Chromatogramm zeigt eine monomodale Verteilung des Copolymers mit M_{w} = 31927 g/mol und PMI = 2,73.

### Erfindungsgemäßes Beispiel 6: [Makromonomer Methode]

In einem mit Rührer, Thermometer, Tropftrichter, Rückflusskühler und Stickstoffeinleitungsrohr versehenen Vierhalskolben werden 57 g des HEMA-IPDI-PDMS Makromonomers (3b) und 38,2 g PMA vorgelegt und gründlich vermischt. Während der gesamten Reaktion wird Stickstoff übergeleitet. Die Temperatur wird auf 110°C erhöht und es wird innerhalb von 3 Stunden eine Mischung aus 3 g EHA und 1,8 g Trigonox C zudosiert. Nach beendeter Dosierung werden sofort 0,3 g Trigonox C zugegeben. Nach weiteren 30 Minuten und 60 Minuten werden noch mal je 0,3 g Trigonox C zugesetzt. Danach wird der Ansatz noch zwei Stunden bei 115°C gehalten. Sämtliches Lösungsmittel wird abdestilliert. Das GPC Chromatogramm zeigt eine monomodale Verteilung des Copolymers mit M_{w} = 90038 g/mol und PMI = 5,87.

### Erfindungsgemäßes Beispiel 7: [Makromonomer Methode]

In einem mit Rührer, Thermometer, Tropftrichter, Rückflusskühler und Stickstoffeinleitungsrohr versehenen Vierhalskolben werden 48 g des HEMA-IPDI-PDMS Makromonomers (3b) und 38,2 g PMA vorgelegt und gründlich vermischt. Während der gesamten Reaktion wird Stickstoff übergeleitet. Die Temperatur wird auf 110°C erhöht und es wird innerhalb von 3 Stunden eine Mischung aus 12 g EHA und 1,8 g Trigonox C zudosiert. Nach beendeter Dosierung werden sofort 0,3 g Trigonox C zugegeben. Nach weiteren 30 Minuten und 60 Minuten werden noch mal je 0,3 g Trigonox C zugesetzt. Danach wird der Ansatz noch zwei Stunden bei 115°C gehalten. Sämtliches Lösungsmittel wird abdestilliert. Das GPC Chromatogramm zeigt eine Verteilung des Copolymers mit M_{w} = 29887 g/mol und PMI = 3,2.

### Vergleich Beispiel 8:

In einem mit Rührer, Thermometer, Tropftrichter, Rückflusskühler und Stickstoffeinleitungsrohr versehenen Vierhalskolben werden 57 g des PDMS Makromonomers ohne Urethanverbindungen (4) und 38,2 g PMA vorgelegt und gründlich vermischt. Während der gesamten Reaktion wird Stickstoff übergeleitet.

Die Temperatur wird auf 110°C erhöht und es wird innerhalb von 3 Stunden eine Mischung aus 3 g EHA und 1,8 g Trigonox C zudosiert. Nach beendeter Dosierung werden sofort 0,3 g Trigonox C zugegeben. Nach weiteren 30 Minuten und 60 Minuten werden noch mal je 0,3 g Trigonox C zugesetzt. Danach wird der Ansatz noch zwei Stunden bei 115°C gehalten. Sämtliches Lösungsmittel wird abdestilliert. Das GPC Chromatogramm zeigt eine Verteilung des Copolymers mit M_{w} = 32777 g/mol und PMI = 4,74.

### Erfindungsgemäßes Beispiel 9: [Makromonomer Methode]

In einem mit Rührer, Thermometer, Tropftrichter, Rückflusskühler und Stickstoffeinleitungsrohr versehenen Vierhalskolben werden 8,2 g des HEMA-TDI-PEG-PDMS Makromonomers (2b) und 102 g PMA vorgelegt und gründlich vermischt. Während der gesamten Reaktion wird Stickstoff übergeleitet. Die Temperatur wird auf 135°C erhöht und es wird innerhalb von 3 Stunden eine Mischung aus 1,24 g MAA, 25,86 g IBMA, 13,78 g HEMA, 17,78 g STY und 0,92 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135°C gehalten. Die OH-Zahl der Polymerlösung beträgt 35,6 mg KOH/g und es wurde ein Festkörpergehalt von 45,8 % bestimmt. Das GPC Chromatogramm zeigt eine monomodale Verteilung des polydimethylsiloxanhaltigen Copolymers mit M_{w} = 25939 g/mol und PMI = 5,68.

### Erfindungsgemäßes Beispiel 10: ["grafting to"-Methodel]

In einem mit Rührer, Thermometer, Tropftrichter, Rückflusskühler und Stickstoffeinleitungsrohr versehenen Vierhalskolben werden 102 g PMA vorgelegt und auf 135°C erhitzt. Innerhalb von 3 Stunden wird eine Mischung aus 1,24 g MAA, 25,85 g IBMA, 15,74 g HEMA, 17,78 g STY und 0,92 g Trigonox C zudosiert. Nach beendeter Dosierung werden sofort 0,15 g Trigonox C zugegeben. Nach weiteren 30 Minuten und 60 Minuten werden noch mal je 0,15 g Trigonox C zugesetzt. Danach wird der Ansatz noch eine Stunde bei 135°C gehalten. Es werden 104 g PMA hinzugegeben. Die Temperatur wird auf 80°C erniedrigt, 0,035 g DBTL und 6,19 g TDI-PEG-PDMS Monoaddukt (2a) werden zugegeben und das Gemisch 5 Stunden bei 80°C gerührt. Die OH-Zahl der Polymerlösung beträgt 33,9 mg KOH/g und es wurde ein Festkörpergehalt von 45,7 % bestimmt. Das GPC Chromatogramm zeigt eine monomodale Verteilung des polydimethylsiloxanhaltigen Copolymers mit M_{w} = 17353 g/mol und PMI = 4,14.

### Anwendungsbeispiele mit polydimethylsiloxanhaltigen Copolymeren als Oberflächenadditiven

Prüfsystem: Acrylat-Melamin-Einbrennlack, klar

**Zusammensetzung (Angaben in Gewichtsteilen)**

| | |
|---|---|
| Setalux 1756 VV-65 (Acrylat-Einbrennharz, Nuplex Resins) | 60 |
| Setamine US 138 BB-70 (Amino-Einbrennharz, Nuplex Resins) | 24 |
| Shellsol A | 8 |
| Xylol | 8 |
| | |
| Additiv | 1 |

Als Additiv werden die Produkte gemäß den erfindungsgemäßen Beispielen 1 und 2 und gemäß den Vergleichsbeispielen 3 und 4 und das Handelprodukt MODAFLOW (Verlaufmittel der Cytec Industries; Festkörperanteil 100 %) eingesetzt, wobei die Einwaage jeweils auf den Festkörperanteil bezogen ist.
Die 5 Komponenten werden zunächst von Hand eingerührt und anschließend 10 Minuten mit einem Scandex-Rüttler gemischt.

### a) Prüfuna als Verlaufmittel

Die Substanzen aus Beispiel 1, 2, 3, 4 sowie MODAFLOW (Verlaufmittel der Cytec Industries; Festkörperanteil 100 %) werden wie oben beschrieben in den Acrylat-Melamin-Einbrennlack eingearbeitet. Einen Tag nach dem Rütteln werden die additivierten Lacke und der nicht additivierte Lack mit einer 100 µm-Spiralrakel auf ein geprimertes Alublech aufgezogen. Nach einer Ablüftzeit von 10 Minuten werden die Bleche 25 Minuten bei 140°C eingebrannt.

Der Verlauf wurde mit dem Wave-scan DOI der Firma Byk-Gardner ermittelt, indem die Lange Welle, die Kurze Welle und der Wert für DOI (distinctness of image) gemessen wurden. Glanz und Haze wurden mit dem Haze-Gloss der Firma Gardner ermittelt.

| | Lange Welle | Kurze Welle | DOI | Glanz R20 | Haze |
|---|---|---|---|---|---|
| Ohne Additiv | 25 | 59 | 85 | 90 | 27 |
| MODAFLOW | 4 | 17 | 92 | 94 | 14 |
| Vergleich Beispiel 4 | 14 | 43 | 89 | 82 | 20 |
| Vergleich Beispiel 3 | 2,6 | 18 | 92 | 95 | 13 |
| Erfindungsgemäßes Beispiel 1 | 2,0 | 15 | 92 | 95 | 12 |
| Erfindungsgemäßes Beispiel 2 | 2,2 | 16 | 92 | 95 | 12 |

Die Ergebnisse zeigen, dass bei Verwendung der Copolymere aus Beispiel 1 und 2 als Verlaufmittel bessere Ergebnisse hinsichtlich Verlauf, Glanz und Haze erzielt werden als bei Verwendung eines herkömmlichen Verlaufmittels oder ohne Verlaufmittel und dass bei Verwendung der Copolymere aus Beispiel 1 und 2 als Verlaufmittel vergleichbare bis bessere Ergebnisse hinsichtlich Verlauf, Glanz und Haze erzielt werden wie bei Verwendung eines Polymers aus Beispiel 3, das mit einem kommerziell verfügbaren methacrylfunktionellen Polydimethylsiloxan, Silaplane FM-0721 (α-Butyldimethylsiloxy-ω-(3-methacryloxypropyl)-polydimethylsiloxan), synthetisiert ist.

### b) Prüfung auf schmutzabweisende Oberflächen

Die Substanzen aus Beispiel 1, 2, 3, 4 werden wie oben beschrieben in den Acrylat-Melamin-Einbrennlack eingearbeitet. Einen Tag nach dem Rütteln werden die additivierten Lacke mit einer 150 µm-Kastenrakel auf eine Glasplatte aufgezogen. Nach einer Ablüftzeit von 10 Minuten werden die Glasplatten 25 Minuten bei 140°C eingebrannt. Von jedem additivierten Lack werden jeweils zwei Glasplatten gefertigt.

Die erhaltenen Lackfilme werden hinsichtlich ihrer schmutz-, und ölabweisenden Wirkung nach folgenden Kriterien beurteilt:

### Visuelle Beurteilung der Lackoberfläche:

Die Lackoberfläche wird auf Trübung im Film und Oberflächenstörungen, wie Krater, Stippen und Unverträglichkeiten, untersucht.

### Bewertung: 1 - 5

1 = Lackoberfläche ohne Oberflächenstörungen
5 = Lackoberfläche mit vielen Oberflächenstörungen

### Edding-Test:

Es wird mit einem Permanent-Marker des Typs "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht, diese mit einem trockenen Tuch abzuwischen.

### Bewertung: 1 - 5

1 = Tinte zieht sich zusammen, lässt sich restlos mit einem Papiertuch entfernen
5 = Tinte spreitet sehr gut auf Untergrund, lässt sich praktisch nicht entfernen

### Verschmutzung mit Bayferrox-Pulver:

Auf die Lackoberfläche werden 3 Teelöffel (∼15 g) Bayferrox 130M, Eisenoxid-Pigment, Bayer AG, gestreut und mit dest. Wasser in 5 Spritzgängen mit Hilfe einer Spritzflasche wieder abgespült. Die möglichst rückstandsfreie Oberfläche wird visuell beurteilt.

### Bewertung: 1 - 5:

1 = Bayferrox-Pulver lässt sich rückstandslos mit Wasser abwaschen
5 = kein Reinigungseffekt beim Abspülen mit Wasser, ein großer roter Fleck verbleibt

### Mineralöl-Ablauftest:

Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur bzw. eine erneute Tropfenbildung visuell bewertet.

### Bewertung: 1 - 5:

1 = Die Ölspur bildet sich sofort in einzelne Tropfen zurück
5 = Die Ölspur bildet sich nicht zurück, sondern spreitet eventuell weiter

**Die erhaltenen Ergebnisse sind in der folgenden Tabelle dargestellt.**

| | Oberfläche | Edding | Edding abgewischt | Bayferrox | Mineralöl |
|---|---|---|---|---|---|
| Ohne Additiv | 5 | 5 | 5 | 1 | 5 |
| Vergleich Beispiel 4 | 4 | 5 | 5 | 3 | 4 |
| Vergleich Beispiel 3 | 1 | 1 | 1 | 1 | 1 |
| Erfindungsgemäßes Beispiel 1 | 1 | 1 | 1 | 1 | 1 |
| Erfindungsgemäßes Beispiel 2 | 1 | 1 | 1 | 1 | 1 |

Die Ergebnisse zeigen, dass durch die Verwendung der Copolymere aus Beispiel 1 und 2 als Additive eine sehr gut schmutz-, und ölabweisende Oberfläche erzielt wird, sowie für das Additiv, welches mit einem kommerziell verfügbaren methacrylfunktionellen Polydimethylsiloxan, Silaplane FM-0721 (α-Butyldimethyl-siloxy-ω-(3-methacryloxypropyl)-polydimethylsiloxan) synthetisiert wurde (Vergleich Beispiel 3).

### Anwendungsbeispiele mit polydimethylsiloxanhaltigen Copolymeren als Netz-und Dispergiermittel

### c) Dispergierung von Pigmenten

Beispiele zur Herstellung von Pigmentpräparationen

Gemäß Tabelle 1 wurden für jeweils eine Ansatzgröße von 100 g nach Vorlage der ersten Position die weiteren Positionen einzeln unter Rühren in ein 250 mL Schraubdeckelglas eingewogen. Nach Zugabe der gleichen Menge an 1 mm großen Glasperlen wurde mittels Rüttler (LAU Disperser) 2 Stunden bei Kühlungsstufe 2 dispergiert. Nach dem Dispergiervorgang erfolgte die Abtrennung der Glasperlen über ein 240 µm Sieb (Faltsieb F4000). Als Vergleichsbeispiele zum Stand der Technik wurden Pigmentpräparationen ohne und mit einem Handelsprodukt auf Basis eines polyethermodifizierten Polysiloxanes (DC 5562) und mit einem Dispergieradditiv auf Basis eines Silikonacrylates ohne Urethanverbindungen (Beispiel 8) hergestellt.

**Tabelle 1:**

| | Beispiel | | | | | |
|---|---|---|---|---|---|---|
| | A [Gew.-%] | B [Gew.-%] | C [Gew.-%] | D [Gew.-%] | E [Gew.-%] | F [Gew.-%] |
| Siliconöl D5 | 50,00 | 45,50 | 45,50 | 45,50 | 45,50 | 45,50 |
| DC 5562 | | 4,50 | | | | |
| Copolymer nach Beispiel 8 | | | 4,50 | | | |
| Copolymer nach Beispiel 6 | | | | 4,50 | | |
| Copolymer nach Beispiel 5 | | | | | 4,50 | |
| Copolymer nach Beispiel 7 | | | | | | 4,50 |
| Bayferroxrot 130M | 50,00 | 50,00 | 50,00 | 50,00 | 50,00 | 50,00 |
| | 100,00 | 100,00 | 100,00 | 100,00 | 100,00 | 100,00 |

Der Festkörperanteil des erfindungsgemäßen Copolymers bzw. der Vergleichsverbindungen beträgt 9 Gew.-% bezogen auf das Pigment.

In Tabelle 2 sind die Viskositäten der Pigmentpräparationen aufgeführt.

**Tabelle 2: Viskositäten (EN ISO 2884-1:2006) der Pigmentpräparationen und der Vergleichsbeispiele [in Pas] in Abhängigkeit von der Scherrate [in 1/s] nach Herstellung und Lagerung.**

| | | Pigmentpräparationen nach Beispiel | | | | | |
|---|---|---|---|---|---|---|---|
| | Scherrate [1/s] | A | B | C | D | E | F |
| Viskosität nach Herstellung | 0,1 | 187 | 30,5 | 0,78 | 0,13 | 0,16 | 0,11 |
| Viskosität nach 1 Woche Lagerung bei 50°C | 0,1 | 101 | 29,1 | 3 | 0,22 | 0,26 | 0,59 |

Die Messung der Viskosität der Pigmentpräparationen erfolgte bei 23°C mit dem Rheometer Stresstech von der Fa. Rheologica, mit dem Meßsystem Kegel C 40 -1° (Messspalt 0,032 mm), bei angegebenen Scherraten. Vor der Probenaufgabe wurden die Pigmentpräparationen zur Homogenisierung mit dem Spatel durchgerührt. Nach dem Zusammenfahren des Messsystems erfolgte sofort die Messung.

Die mit einem erfindungsgemäßen Copolymer hergestellten Pigmentpräparationen (Beispiele 5, 6 und 7) zeigen sowohl nach der Herstellung als auch nach 1 Woche Lagerung bei 50°C die niedrigsten Viskositäten im Test. Im Vergleich zu den Beispielen mit einem Copolymer auf Basis eines Silikonacrylates ohne Urethanverbindungen (Beispiel 8) oder einem Handelsprodukt auf Basis eines polyethermodifizierten Polysiloxanes (DC5562) sind die Viskositäten der erfindungsgemäßen Beispiele wesentlich niedriger.

## Patentansprüche

1. Copolymer, erhältlich durch radikalische Copolymerisation eines oder mehrerer urethan-basierter, Polysiloxan enthaltender Makromonomere und mindestens eines oder mehrerer weiterer radikalisch polymerisierbarer Monomere, **dadurch gekennzeichnet, dass** das Copolymer ein (Meth)acrylat-Copolymer ist, das oder die Makromonomere Oligomere oder Polymere mit einer funktionellen Endgruppe sind, und das oder die Makromonomere durch Umsetzung mindestens
eines Hydroxy-funktionalen (Meth)acrylats
und mindestens eines Polysiloxan-, Polyether-Polysiloxan-, Polyester-Polysiloxan- oder Polyether/Polyester-Polysiloxan-modifizierten Isocyanates
gegebenenfalls in Anwesenheit eines Katalysators zur Herstellung der Urethanbindung und mindestens eines Inhibitors der radikalischen Polymerisation erhältlich sind und dass mindestens 85 % der eingesetzten Monomere zur Herstellung des Copolymers nur eine radikalisch polymerisierbare Doppelbindung haben.

2. Copolymer gemäß Anspruch 1, **dadurch gekennzeichnet, dass** die Umsetzung des mindestens einen Hydroxy-funktionalen (Meth)acrylats mit dem mindestens einen Polysiloxan-, Polyether-Polysiloxan-, Polyester-Polysiloxan- oder Polyether/Polyester-Polysiloxan-modifizierten Isocyanat in einem molaren Verhältnis von 4 : 1 bis 1 : 1 erfolgt.

3. Copolymer gemäß einem der Ansprüche 1 oder 2, **dadurch gekennzeichnet, dass** das mindestens eine Hydroxy-funktionale (Meth)acrylat die allgemeinen Formel (I) aufweist:
U - L - O - H (I)
wobei U für eine ethylenisch ungesättigte, radikalisch polymersierbare Kopfgruppe mit Acryloyl- [H₂C = CH - C(=O) - O -] oder Methacryloyl-Struktur [H₂C = C(CH₃)-C(=O) - O -] steht und
L für einen zweibindigen organischen Rest steht, der keine radikalisch polymerisierbaren Gruppen enthält, bevorzugt ausgewählt aus der Gruppe bestehend aus Alkylenresten, Polyesterresten und Polyalkylenoxidresten.

4. Copolymer gemäß einem der Ansprüche 1 bis 3, **dadurch gekennzeichnet, dass** das mindestens eine Polysiloxan-, Polyether-Polysiloxan-, Polyester-Polysiloxan-oder Polyether/Polyester-Polysiloxan-modifizierte Isocyanat die allgemeine Formel (II) aufweist: 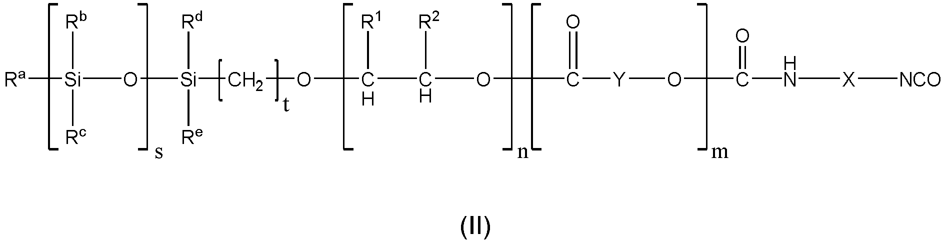
worin alle R¹ und R² unabhängig voneinander für H, Alkyl und/oder Aryl stehen, vorzugsweise für H,
X für Alkylen, Cycloalkylen und/oder Aralkylen steht, vorzugsweise für den Rest eines Diisocyanates ohne die NCO-Gruppen,
alle Y für Alkylen und/oder Cycloalkylen stehen,
n und m unabhängig voneinander sind, wobei die Summe n+m = 0 bis 100 ist,
R^{a} für einen gesättigten linearen Alkylrest mit 1 bis 30 Kohlenstoffatomen, einen gesättigten verzweigten oder zyklischen Alkylrest mit 3 bis 30 Kohlenstoffatomen oder einen Arylrest, einen Alkylarylrest oder einen Arylalkylrest mit 6 bis 30 Kohlenstoffatomen steht, vorzugsweise für einen Methylrest oder einen Butylrest,
alle R^{b} und R^{c} unabhängig voneinander für gesättigte lineare Alkylreste mit 1 bis 6 Kohlenstoffatomen, gesättigte verzweigte oder zyklische Alkylreste mit 3 bis 6 Kohlenstoffatomen, ungesättigte Alkylreste mit 2 bis 6 Kohlenstoffatomen oder
Arylreste, Alkylarylreste oder Arylalkylreste mit 6 bis 12 Kohlenstoffatomen stehen,
vorzugsweise für Methyl-, Ethyl-, Propyl-, Butyl-, Phenyl- oder substituierte Phenylreste, besonders bevorzugt für Methylreste,
alle R^{d} und R^{e} unabhängig voneinander für R^{a}_{[}SiR^{b}R^{c}O]_{s,} wobei R^{a}, R^{b} und R^{c} wie oben definiert sind und unabhängig davon ausgewählt sind, gesättigte lineare Alkylreste mit 1 bis 6 Kohlenstoffatomen, gesättigte verzweigte oder zyklische Alkylreste mit 3 bis 6 Kohlenstoffatomen, Alkenreste mit 2 bis 6 Kohlenstoffatomen oder Arylreste, Alkylarylreste oder Arylalkylreste mit 6 bis 12 Kohlenstoffatomen stehen, vorzugsweise für Methyl-, Ethyl-, Propyl-, Butyl-, Phenyl- oder substituierte Phenylreste, besonders bevorzugt für Methylreste,
s = 1 bis 400 und t = 2 bis 30 ist, vorzugsweise ist s = 4 bis 200 und t = 3 bis 6.

5. Copolymer gemäß den Ansprüchen 1 bis 4, **dadurch gekennzeichnet, dass** mindestens 90 % der eingesetzten Monomere nur eine radikalisch polymerisierbare Doppelbindung haben, vorzugsweise mindestens 95 %, besonderes bevorzugt mindestens 98 %, ganz besonderes bevorzugt mindestens 99 %.

6. Copolymer gemäß den Ansprüchen 1 bis 5, **dadurch gekennzeichnet, dass** das Copolymer ein gewichtsmittleres Molekulargewicht von 2 000 bis 100 000 g/mol, vorzugsweise 5 000 bis 75 000 g/mol und besonderes bevorzugt 10 000 bis 50 000 g/mol hat.

7. Copolymer gemäß den Ansprüchen 1 bis 6, **dadurch gekennzeichnet, dass** maximal 5 % der einpolymerisierten Monomere Fluor enthalten, vorzugsweise maximal 2 %, besonders bevorzugt keines der einpolymerisierten Monomere.

8. Copolymer gemäß den Ansprüchen 1 bis 7, **dadurch gekennzeichnet, dass** das Copolymer zu 0,2 - 95 Gew.-%, bezogen auf das Gesamtgewicht aller eingesetzten Makromonomere und Comonomere, aus einpolymerisierten Makromonomeren aufgebaut ist.

9. Copolymer gemäß den Ansprüchen 1 bis 8, **dadurch gekennzeichnet, dass** das eingesetzte Polysiloxan-, Polyether-Polysiloxan-, Polyester-Polysiloxan- oder Polyether/Polyester-Polysiloxan-modifizierte Isocyanat vor der Umsetzung aufgereinigt wurde, vorzugsweise mittels Dünnschichtverdampfer.

10. Verfahren zur Herstellung eines Copolymers gemäß den Ansprüchen 1 bis 9, **dadurch gekennzeichnet, dass** ein oder mehrere Makromonomere, die durch Umsetzung mindestens
eines Hydroxy-funktionalen (Meth)acrylates
und mindestens eines Polysiloxan-, Polyether-Polysiloxan-, Polyester-Polysiloxan- oder Polyether/Polyester-Polysiloxan-modifizierten Isocyanates
gegebenenfalls in Anwesenheit eines Katalysators zur Herstellung der Urethanbindung und mindestens eines Inhibitors der radikalischen Polymerisation erhältlich sind, und ein oder mehrere weitere radikalisch polymerisierbare Comonomere radikalisch copolymerisiert werden, wobei mindestens 85 % der eingesetzten Monomere zur Herstellung des Copolymers nur eine radikalisch polymerisierbare Doppelbindung haben und das eingesetzte Polysiloxan-, Polyether-Polysiloxan-, Polyester-Polysiloxan- oder Polyether/Polyester-Polysiloxan-modifizierte Isocyanat aufgereinigt wurde.

11. Verfahren zur Herstellung eines Copolymers gemäß den Ansprüchen 1 bis 9, **dadurch gekennzeichnet, dass** das (Meth)acrylat-Copolymer durch Umsetzung einer oder mehrerer urethan-basierter Komponenten eines Polysiloxan-, Polyether-Polysiloxan-, Polyester-Polysiloxan- oder Polyether/Polyester-Polysiloxan-modifizierten Isocyanates mit einem Hydroxy-funktionalen (Meth)acrylat-Copolymer aus mindestens einem Hydroxy-funktionalen (Meth)acrylat-Monomer und einem oder mehreren weiteren radikalisch polymerisierbaren Comonomeren gegebenenfalls in Anwesenheit eines Katalysators zur Herstellung der Urethanbindung erhältlich ist, wobei mindestens 85 % der eingesetzten Monomere zur Herstellung des Hydroxy-funktionalen (Meth)acrylat-Copolymers nur eine radikalisch polymerisierbare Doppelbindung haben.

12. Verwendung eines Copolymers nach einem oder mehreren der Ansprüche 1 bis 9 und/oder hergestellt gemäß einem der Ansprüche 10 oder 11 als Additiv, wie Netz-und Dispergiermittel, Verlaufmittel, Entschäumer, Stabilisierungsmittel oder schmutz-und ölabweisendes Mittel, in Beschichtungsmitteln, Kunststoffen, Kosmetika oder homogenen Dispersionen, wie Pigment- und Füllstoffpräparationen.

13. Verwendung nach Anspruch 12, **dadurch gekennzeichnet, dass** der Copolymeranteil 0,01 bis 5 Gew.-%, bevorzugt in 0,02 bis 2 Gew.-% und besonders bevorzugt in 0,03 bis 1 Gew.-%, jeweils bezogen auf die gesamte Zusammensetzung des Beschichtungsmittels oder des Kunststoffes, in Beschichtungsmitteln oder Kunststoffen beträgt oder in homogenen Dispersionen, wie Pigment- und Füllstoffpräparationen, 0,01 bis 90 Gew.-%, bevorzugt 1 bis 50 Gew.-%, ganz besonders bevorzugt 2 bis 40 Gew.-%, jeweils bezogen auf die gesamte Zusammensetzung der homogenen Dispersion, beträgt.

14. Verfahren zur Herstellung einer homogenen Dispersion enthaltend mindestens ein Copolymer gemäß einem der Ansprüche 1 bis 9 und/oder hergestellt nach einem Verfahren gemäß einem der Ansprüche 10 oder 11, **dadurch gekennzeichnet, dass** das Verfahren das Mischen von mindestens einem Pigment und/oder Füllstoff in einem Träger, gewählt aus der Gruppe bestehend aus mindestens einem Silikonöl, mit Hilfe mindestens eines Copolymers gemäß einem der Ansprüche 1 bis 9 und/oder hergestellt nach einem Verfahren gemäß einem der Ansprüche 10 und 11 umfasst.

15. Beschichtungsmittel, Kunststoff oder homogene Dispersionen enthaltend mindestens ein Copolymer gemäß einem der Ansprüche 1 bis 9 und/oder hergestellt gemäß einem der Ansprüche 10 oder 11.

## Claims

1. A copolymer, obtainable by radical copolymerization of one or more urethane-based macromonomers containing polysiloxane, and at least one or more radically polymerisable monomers, **characterized in that** the copolymer is a (meth)acrylate copolymer, the macromonomer(s) is/are oligomers or polymers with a functional terminal group, and the macromonomer(s) is/are obtainable by reacting
at least one hydroxy-functional (meth)acrylate
and at least one
polysiloxane-, polyether-polysiloxane-, polyester-polysiloxane- or polyether/polyester-polysiloxane-modified isocyanate,
optionally in the presence of a catalyst for the formation of the urethane bond, and at least on inhibitor of radical polymerisation, and that at least 85 % of the monomers utilized for the production of the copolymer have only one radically polymerisable double bond.

2. The copolymer according to claim 1, **characterized in that** the reaction of the at least one hydroxy-functional (meth)acrylate with the at least one polysiloxane-, polyether-polysiloxane-, polyester-polysiloxane- or polyether/polyester-polysiloxane-modified isocyanate takes place with a molar ratio of from 4 : 1 to 1 : 1.

3. The copolymer according to any one of claims 1 or 2, **characterized in that** the at least one hydroxy-functional (meth)acrylate has the general formula (I):
U - L - O - H (I)
wherein U represents an ethylenically unsaturated, radically polymerizable head group with acryloyl- [H₂C = CH - C(=O) - O -] or methacryloyl structure [H₂C = C(CH₃) - C(=O) - O -], and
L represents an organic radical with two bonds not containing any radically polymerisable groups, preferably selected from the group consisting of alkylene radicals, polyester radicals and polyalkylene oxide radicals.

4. The copolymer according to any one of claims 1 to 3, **characterized in that** the at least one polysiloxane-, polyether-polysiloxane-, polyester-polysiloxane- or polyether/polyester-polysiloxane-modified isocyanate has the general formula (II): 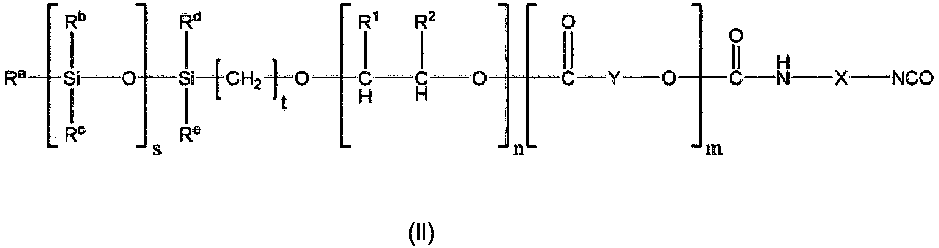
wherein each R¹ and R² independently of one another represents H, alkyl and/or aryl, preferably H,
X represents alkylene, cycloalkylene and/or aralkylene, preferably for the radical of a diisocyanate without the NCO groups,
each Y represents alkylene and/or cycloalkylene,
n and m are independent of one another, wherein the sum n + m = 0 to 100,
R^{a} represents a saturated linear alkyl radical with 1 to 30 carbon atoms, a saturated branched or cyclic alkyl radical with 3 to 30 carbon atoms or an aryl radical, an alkylaryl radical or an arylalkyl radical with 6 to 30 carbon atoms, preferably a methyl radical or a butyl radical,
each R^{b} and R^{c} independently of one another represents saturated linear alkyl radicals with 1 to 30 carbon atoms, saturated branched or cyclic alkyl radicals with 3 to 6 carbon atoms, unsaturated alkyl radicals with 2 to 6 carbon atoms or aryl radicals, alkylaryl radicals or arylalkyl radicals with 6 to 12 carbon atoms, preferably methyl, ethyl, propyl, butyl, phenyl or substituted phenyl radicals, particularly preferably methyl radicals,
each R^{d} and R^{e} independently of one another represent R^{a}[SiR^{b}R^{c}O]ₛ wherein R^{a}, R^{b} and R^{c} are as defined above and are selected independently thereof, saturated linear alkyl radicals with 1 to 6 carbon atoms, saturated branched or cyclic alkyl radicals with 3 to 6 carbon atoms, alkene radicals with 2 to 6 carbon atoms or aryl radicals, alkylaryl radicals or arylalkyl radicals with 6 to 12 carbon atoms, methyl, ethyl, propyl, butyl, phenyl or substituted phenyl radicals, particularly preferable for methyl radicals,
s = 1 to 400 and t = 2 to 30, preferably s = 4 to 200 and t = 3 to 6.

5. The copolymer according to claims 1 to 4, **characterized in that** at least 90 %, preferably at least 95 %, particularly preferable at least 98 %, and most preferable at least 99 % of the monomers utilized have only one radically polymerisable double bond.

6. The copolymer according to claims 1 to 5, **characterized in that** the copolymer has a weight-average molecular weight from 2 000 to 100 000 g/mol, preferably 5 000 to 75 000 g/mol and particularly preferable 10 000 to 50 000 g/mol.

7. The copolymer according to claims 1 to 6, **characterized in that** at most 5 % of the polymerized monomers contain fluorine, preferably at most 2 %, particularly preferable none of the polymerized monomers.

8. The copolymer according to claims 1 to 7, **characterized in that** das copolymer is comprised of the polymerized macromonomers to 0.2 - 95 % by weight, with respect to the total weight of all macromonomers and comonomers utilized.

9. The copolymer according to claims 1 to 8, **characterized in that** the polysiloxane-, polyether-polysiloxane-, polyester-polysiloxane- or polyether/polyester-polysiloxane-modified isocyanate utilized has been purified before the reaction, preferably by means of a thin-film evaporator.

10. A method for producing a copolymer according to claims 1 to 9, **characterized in that** one or more macromonomers obtainable by reacting at least
one hydroxy-functional (meth)acrylate
and at least one
polysiloxane-, polyether-polysiloxane-, polyester-polysiloxane- or polyether/polyester-polysiloxane-modified isocyanate,
optionally in the presence of a catalyst for the formation of the urethane binding, and at least on inhibitor of radical polymerisation, and one or more additional radically polymerisable comonomers are radically copolymerized, wherein at least 85 % of the monomers utilized for the production of the copolymer have only one radically polymerisable double bond, and the polysiloxane-, polyether-polysiloxane-, polyester-polysiloxane- or polyether/polyester-polysiloxane-modified isocyanate has been purified.

11. A method for producing a copolymer according to claims 1 to 9, **characterized in that** the (meth)acrylate copolymer is obtainable by reacting one or more urethane-based components of a polysiloxane-, polyether-polysiloxane-, polyester-polysiloxane- or polyether/polyester-polysiloxane-modified isocyanate with a hydroxy-functional (meth)acrylate copolymer from at least one hydroxy-functional (meth)acrylate monomer and one or more additional radically polymerisable comonomers, optionally in the presence of a catalyst for the formation of the urethane bond, wherein at least 85 % of the monomers utilized for the production of the hydroxy-functional (meth)acrylate copolymer have only one radically polymerisable double bond.

12. Use of a copolymer according to one or more of claims 1 to 9 and/or produced according to any one of claims 10 or 11 as an additive, such as wetting and dispersing agent, levelling agent, anti-foaming agent, stabilizing agent or dirt and oil repellent agent, in coating agents, plastics, cosmetics or homogenous dispersions, such as pigment or filler preparations.

13. The use of claim 12, **characterized in that** the copolymer content is 0.01 to 5 % by weight, preferably 0.02 to 2 % by weight and particularly preferably 0.03 to 1 % by weight, in each case with respect to the total composition of the coating agent or the plastic, or, in homogenous dispersions such as pigment and filler preparations, 0.01 to 90 % by weight, preferably 1 to 50 % by weight, particularly preferably 2 to 40 % by weight, in each case with respect to the total composition of the homogenous dispersion.

14. A method for producing a homogenous dispersion containing at least one copolymer according to any one of claims 1 to 9 and/or produced according to a method according to any one of claims 10 or 11, **characterized in that** the method comprises mixing at least one pigment and/or filler in a carrier, selected from the group consisting of at least one silicon oil, with the aid of at least one copolymer according to any one of claims 1 to 9 and/or produced according to a method according to any one of claims 10 and 11.

15. Coating agents, plastics or homogenous dispersions containing at least one copolymer according to any one of claims 1 to 9 and/or produced to any one of claims 10 or 11.

## Revendications

1. Copolymère obtenable par copolymérisation par radicaux d'un ou plusieurs macromonomères à base d'uréthane et contenant du polysiloxane, et au moins un ou plusieurs monomères polymérisables par radicaux, **caractérisé en ce que** le copolymère est un copolymère de (méth)acrylate, le ou les macromonomères sont des oligomères ou polymères avec un group terminal fonctionnel, et le ou les macromonomères sont obtenables par réaction d'au moins
un (méth)acrylate hydroxyfonctionnel
et au moins un
isocyanate modifié par polysiloxane, polyéther-polysiloxane, polyester-polysiloxane ou polyéther/polyester-polysiloxane,
le cas échéant en présence d'un catalyseur pour la formation de la liaison uréthane, et au moins un inhibiteur de la polymérisation par radicaux, et **en ce qu'**au moins 85 % des monomères utilisés pour la fabrication du copolymère ont seulement une liaison double polymerisable par radicaux.

2. Copolymère selon la revendication 1, **caractérisé en ce que** la réaction de l'au moins un (méth)acrylate hydroxyfonctionnel avec l'au moins un isocyanate modifié par polysiloxane, polyéther-polysiloxane, polyester-polysiloxane ou polyéther/polyester-polysiloxane s'effectue dans un rapport molaire de 4 : 1 à 1 : 1.

3. Copolymère selon l'une quelconque des revendications 1 ou 2, **caractérisé en ce que** l'au moins un (méth)acrylate hydroxyfonctionnel a la formule générale (I) :
U - L - O - H (I),
dans laquelle U représente un groupement de tête éthyléniquement non saturé et polymerisable par radicaux avec une structure d'acryloyle [H₂C = CH - C(=O) - O -] ou méthacryloyle [H₂C = C(CH₃) - C(=O) - O -], et
L représente un groupement organique avec deux liaisons qui ne contient pas des groupes polymérisables par radicaux, de préférence choisi dans le groupe consistant en radicaux d'alkylène, radicaux de polyester et radicaux de poly(oxyde d'alkylène).

4. Copolymère selon l'une quelconque des revendications 1 à 3, caractérisé(e) en ce que l'au moins un isocyanate modifié par polysiloxane, polyéther-polysiloxane, polyester-polysiloxane ou polyéther/polyester-polysiloxane a la formule générale (II) : 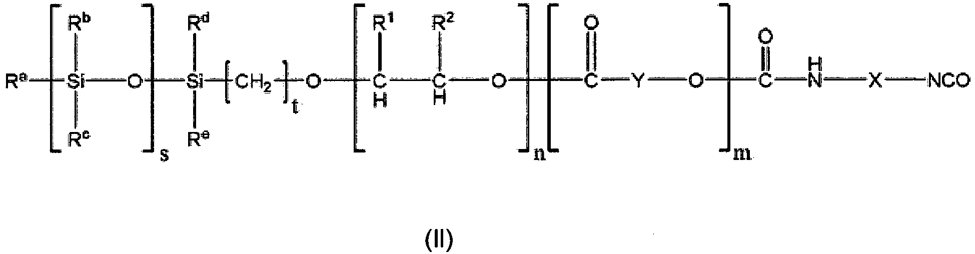
dans laquelle chaque R¹ et R², indépendamment les uns des autres, représentent H, alkyle et/ou aryle, de préférence H,
X représente alkylène, cycloalkylène et/ou aralkylène, de préférence un résidu d'un diisocyanate sans les groupes NCO, chaque Y représente alkylène et/ou cycloalkylène,
n et m sont indépendants l'un de l'autre, la somme n + m = 0 à 100,
R^{a} représente un résidu alkyle saturé et linéaire avec 1 à 30 atomes de carbone, un résidu alkyle saturé et ramifié ou cyclique avec 3 à 30 atomes de carbone ou un résidu aryle, un résidu alkylaryle ou un résidu arylalkyle avec 6 à 30 atomes de carbone, de préférence pour un résidu méthyle ou un résidu butyle,
chaque R^{b} et R^{c}, indépendamment les uns des autres, représente des résidus alkyle saturés et linéaires avec 1 à 6 atomes de carbone, des résidus alkyle saturés et ramifiés ou cycliques avec 3 à 6 atomes de carbone, des résidus alkyle non-saturés avec 2 à 6 atomes de carbone ou des résidus aryle, des résidus alkylaryle ou des résidus arylalkyle avec 6 à 12 atomes de carbone, de préférence pour des résidus méthyle, éthyle, propyle, butyle, phényle ou des résidus phényle substitués, particulièrement préféré des résidus méthyle,
chaque R^{d} et R^{e}, indépendamment les uns des autres, représente R^{a}[SiR^{b}R^{c}O]ₛ, dans lequel R^{a}, R^{b} et R^{c} sont tels que définis ci-dessus et choisis indépendamment, des résidus alkyle saturés et linéaires avec 1 à 6 atomes de carbone, des résidus alkyle saturés et ramifiés ou cycliques avec 3 à 6 atomes de carbone, des résidus alkène avec 2 à 6 atomes de carbone, ou des résidus aryle, des résidus alkylaryle ou des résidus arylalkyle avec 6 à 12 atomes de carbone, de préférence pour des résidus méthyle, éthyle, propyle, butyle, phényle ou des résidus phényle substitués, particulièrement préféré des résidus méthyle,
s = 1 à 400 et t = 2 à 30, de préférence s = 4 à 200 et t = 3 à 6.

5. Copolymère selon les revendications 1 à 4, **caractérisé en ce qu**'au moins 90 % des monomères utilisés, de préférence au moins 95 %, particulièrement préféré 98 %, tout particulièrement au moins 99 %, ont seulement une liaison double polymerisable par radicaux.

6. Copolymère selon les revendications 1 bis 5, **caractérisé en ce que** le copolymère présente un poids moléculaire moyen en poids de 2 000 à 100 000 g/mol, de préférence 5 000 à 75 000 g/mol, et particulièrement préféré de 10 000 à 50 000 g/mol.

7. Copolymère selon les revendications 1 à 6, **caractérisé en ce qu**'au plus 5 % des monomères polymérisés, de préférence au plus 2 %, particulièrement préféré aucun des monomères polymérisés, contiennent du fluor.

8. Copolymère selon les revendications 1 à 7, **caractérisé en ce que** le copolymère est composé de macromonomères polymérisés dans une proportion de 0,2 - 95 % en poids, par rapport au poids total de tous les macromonomères et comonomères utilisés.

9. Copolymère selon les revendications 1 bis 8, **caractérisé en ce que** l'isocyanate modifié par polysiloxane, polyéther-polysiloxane, polyester-polysiloxane ou polyéther/polyester-polysiloxane est purifié avant la réaction, de préférence au moyen d'un évaporateur à couche mince.

10. Procédé pour la fabrication d'un copolymère selon les revendications 1 à 9, **caractérisé en ce qu**'un ou plusieurs macromonomères qui sont obtenables par réaction d'au moins
un (méth)acrylate hydroxyfonctionnel
et au moins un
isocyanate modifié par polysiloxane, polyéther-polysiloxane, polyester-polysiloxane ou polyéther/polyester-polysiloxane,
le cas échéant en présence d'un catalyseur pour la formation de la liaison uréthane, et au moins un inhibiteur de la polymérisation par radicaux, et en outre un ou plusieurs comonomères polymerisables par radicaux sont copolymérisés par radicaux, dans lequel au moins 85 % des monomères utilisés pour la fabrication du copolymère ont seulement une liaison double polymerisable par radicaux, et l'isocyanate modifié par polysiloxane, polyéther-polysiloxane, polyester-polysiloxane ou polyéther/polyester-polysiloxane est purifié.

11. Procédé pour la fabrication d'un copolymère selon les revendications 1 à 9, **caractérisé en ce que** le copolymère de (méth)acrylate est obtenable par réaction d'un isocyanate modifié par polysiloxane, polyéther-polysiloxane, polyester-polysiloxane ou polyéther/polyester-polysiloxane avec un copolymère de (méth)acrylate hydroxyfonctionnel à partir d'au moins un monomère de (méth)acrylate hydroxyfonctionnel et en outre un ou plusieurs comonomères polymérisables par radicaux, le cas échéant en présence d'un catalyseur pour la formation de la liaison d'uréthane, au moins 85 % des monomères utilisés pour la fabrication du copolymère de (méth)acrylate hydroxyfonctionnel ayant seulement une liaison double polymerisable par radicaux.

12. Utilisation d'un copolymère selon l'une ou plusieurs des revendications 1 à 9 et/ou fabriqué selon l'une des revendications 10 ou 11 en tant qu'additif, comme agent mouillant et de dispersion, agent d'écoulement, agent anti-mousse, agent stabilisant ou agent antisalissant et oléofuge, dans des agents de revêtement, des matières plastiques, des produits cosmétiques ou des dispersions homogènes, comme des préparations des pigments ou des matières de remplissage.

13. Utilisation selon la revendication 12, **caractérisé en ce que,** dans les agents de revêtement ou les matières plastiques, le contenu du copolymère est de 0,01 à 5 % en poids, de préférence 0,02 à 2 % en poids, et particulièrement préféré 0,03 à 1 % en poids, respectivement par rapport à la composition totale de l'agent de revêtement ou de la matière plastique, ou dans les dispersions homogènes, comme des préparations des pigments ou des matières de remplissage, 0,01 à 90 % en poids, de préférence 1 à 50 % en poids, particulièrement préféré 2 à 40 % en poids, respectivement par rapport à la composition totale de la dispersion homogène.

14. Procédé pour la fabrication d'une dispersion homogène contenant au moins un copolymère selon l'une quelconque des revendications 1 à 9 et/ou fabriqué selon un procédé selon l'une quelconque des revendications 10 ou 11, **caractérisé en ce que** le procédé comprend mélanger au moins un pigment et/ou une matière de remplissage dans un support, choisi dans le groupe consistant en au moins une huile silicone, à l'aide d'au moins un copolymère selon l'une quelconque des revendications 1 à 9 et/ou fabriqué selon un procédé selon l'une quelconque des revendications 10 et 11.

15. Agent de revêtement, matière plastique ou dispersion homogène, contenant au moins un copolymère selon l'une quelconque des revendications 1 à 9 et/ou fabriqué selon l'une quelconque des revendications 10 ou 11.
